# EUROPEAN PATENT APPLICATION

(11) **EP 1 767 505 A2**
(43) Date of publication of application: **28.03.2007**
(21) Application number: 06121015.9
(22) Date of filing: 21.09.2006
(51) Int. Cl.: C04B 24/26, C04B 103/30

(54) **Polycarboxylic acid polymer for cement admixture and cement admixture**

(30) Priority: 22.09.2005 JP 2005276113
(71) Applicant: Nippon Shokubai Co.,Ltd., Osaka-shi, Osaka 541-0043 (JP)
(72) Inventor: Yamazaki, Hiroshi, Suita-shi, Osaka 564-0024 (JP)
(74) Representative: Hart Davis, Jason

(57) **Abstract**

The present invention realtes to a polycarbaxylic acid polymer for a cement admixture which can provide a cement composition superior in workability without increasing the amount of the polycarboxylic acid polymer to be added to cement and in addition can impart adequate workability to a cement composition having a relatively small slump value. Said polycarboxylic acid polymer has a branched structure on the main chain, the side chain of which is a polyalkylene glycol chain having 2 to 18 carbon atoms.

## Description

### TECHNICAL FIELD

The present invention relates to a polycarboxylic acid polymer for a cement admixture, a cement admixture, a cement composition and a method of producing a polycarboxylic acid polymer for a cement admixture and more specifically to a polycarboxylic acid polymer for a cement admixture which has a novel polymer structure and can provide a cement composition superior in workability without increasing an amount of the polycarboxylic acid polymer to be added to cement and in addition can impart adequate workability to a cement composition having a relatively small slump flow value, a cement admixture and a cement composition which comprise the polycarboxylic acid polymer for a cement admixture, and a method of producing the polycarboxylic acid polymer for a cement admixture.

### BACKGROUND ART

A cement admixture containing a polycarboxylic acid polymer is widely used in cement compositions such as cement paste, mortar, concrete and the like and becomes a material essential for constructing civil engineering structures and building structures from a cement composition. Such a cement admixture is employed as a water reducing agent and has an effect of improving the strength and the durability of cured formulations by reducing water of a cement composition through enhancing the fluidity of the cement composition. As such a water reducing agent, a polycarboxylic acid water reducing agent which exerts higher water reducing performance than conventional naphthalenic water reducingagentswasproposed(see,for example, Japanese Kokai Publication No. S58-38380) and it has many actual applications as a high-performance AE water reducing agent recently. However, since such a copolymer of polyethylene glycol methacrylate and methacrylic acid has a straight main chain structure, it shrink in the cement composition and only a part of polymer molecules can adsorb to cement. There was a problem that since the portions of polymer molecules which cannot adsorb to cement are entangled with each other while forming a layer of hydration and consequently the viscosity of the cement composition becomes high, the workability of the cement composition is insufficient.

Then, in order to improve such the viscosity of a cement composition, a polycarboxylic acid water reducing agent, in which a length of a polyethylene glycol chain was shortened, was proposed (see, for example, Japanese Kokai Publication No. 2004-43280) but this reducing agent had a defect that the viscosity was improved to some extent but it was still insufficient and further an amount of the reducing agent to be added to cement increases because of a low water reducing property.

And, on the one hand, a polycarboxylic acid water reducing agent formed by replacing a part of a polyethylene glycol chain with propylene oxide was proposed (see, for example, Japanese Examined Patent Publication No. 2004-99100) but this reducing agent also had a defect that an amount of the reducing agent to be added to cement increases.

Further, when the polycarboxylic acid water reducing agent described in Japanese Kokai Publication No. 2004-43280 or Japanese Examined Patent Publication No. 2004-99100 was used, since it was necessary to employ a relatively large slump flow value in order to secure the adequate workability of a cement composition, an effect of the polycarboxylic acid water reducing agent was not sufficient at all in civil engineering applications where a cement composition having a relatively small slump flow value was suitably employed.

And, on the one hand, a copolymer of polyalkenyl ether formed by adding alkyleneoxide having 2 to 3 carbon atoms to a compound containing 2 to 8 hydroxyl groups, maleic anhydride and alkenyl ether was proposed (see, for example, Japanese Kokai Publication No. H6-305798) but this copolymer had a problem that since this polyalkenyl ether had two or more double bonds, the resulting copolymer tends to become high-molecular weight or tends to gelate and therefore a cement composition is apt to have high viscosity and low workability. Further, there was also a problem that since maleic anhydride was essential, only restricted performance could be attained.

On the other hand, a block polymer which was formed by using a polyfunctional mercaptan and has a polystyrene block and a butylacrylate-acrylic acid copolymer block was proposed (see, for example, Japanese Kokai Publication No. H7-179538), but since every polymer was insoluble in water and did not contain a site including the capability of dispersing in cement, it could not be used as a cement admixture.

### SUMMARY OF THE INVENTION

The present invention was made in view of the above state of the art, and has an object to provide a polycarboxylic acid polymer for a cement admixture which has a novel polymer structure and can provide a cement composition superior in workability without increasing an amount of the polycarboxylic acid polymer for a cement admixture to be added to cement and in addition can impart adequate workability to a cement composition having a relatively small slump value, a cement admixture comprising the polycarboxylic acid polymer for a cement admixture, a cement composition comprising the cement admixture and cement and a method of producing the polycarboxylic acid polymer for a cement admixture.

The present inventors made investigations concerning the workability of a cement composition and the structure of a polycarboxylic acid polymer for a cement admixture, and consequently found that a polycarboxylic acid polymer for a cement admixture having a branched structure on the main chain, the side chain of which is a polyalkylene glycol chain having 2 to 18 carbon atoms, can provide a cement composition superior in workability without increasing an amount of the polycarboxylic acid polymer for a cement admixture to be added to cement and in addition can impart adequate workability to a cement composition having a relatively small slump flow value. These findings have now led to completion of the present invention.

That is, the present invention is a composition using as a cement admixture including a polycarboxylic acid polymer having a main chain comprising a constituent unit expressed by the following formula (1): 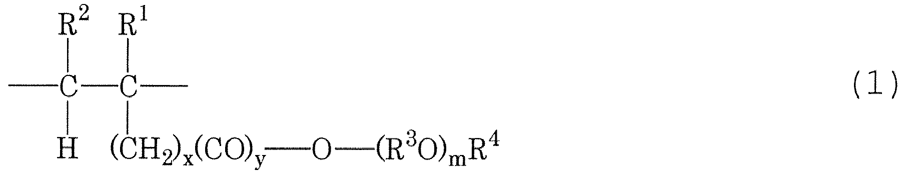 in the formula (1), R¹ and R² being the same or different and each representing a hydrogen atom or a methyl group, x representing a number of 0 to 2, y representing 0 or 1, R³O being the same or different and each representing an oxyalkylene group having 2 to 18 carbon atoms, that is, R³O representing a mixture of one or two or more species of oxyalkylene groups having 2 to 18 carbon atoms, R⁴ representing a hydrogen atom or a hydrocarbon group having 1 to 30 carbon atoms, and m being an average number of moles added of an oxyalkylene group and representing a number of 1 to 300,
wherein the main chain of the polymer has a branched structure.

The present invention also is the composition using as a cement admixture including the polycarboxylic acid polymer,
wherein the polycarboxylic acid polymer for a cement admixture is a polymer expressed by the following formula (2):

(R⁵OX)_{α}Y(Z-S-P)_{β} (2)

in the formula (2), X representing an alkylene group having 1 to 30 carbon atoms, OX representing an oxyalkylene group having 1 to 30 carbon atoms, R⁵ representing a hydrogen atom or an alkyl group having 1 to 30 carbon atoms, Y representing either a carbon atom or a hydrocarbon group having 1 to 30 carbon atoms, Z representing an alkylene group or ester having 1 to 30 carbon atoms, α representing a number of 0 to 25, β representing a number of 2 to 50, S representing a sulfur atom and P representing a polycarboxylic acid polymer for a cement admixture comprising a site expressed by the formula (1), that is, P comprising a constituent unit expressed by the formula (1).

The present invention also is a composition using as a cement admixture including a polycarboxylic acid polymer obtained by polymerizing monomer components comprising:a polyfunctional mercaptan expressed by the following formula (3):

(R⁵OX)_{α}Y(Z-SH)_{β} (3)

in the formula (3), X representing an alkylene group having 1 to 30 carbon atoms, R⁵ representing a hydrogen atom or an alkyl group having 1 to 30 carbon atoms, Y representing either a carbon atom or a hydrocarbon group having 1 to 30 carbon atoms, Z representing an alkylene group or ester having 1 to 30 carbon atoms, α representing a number of 0 to 25, β representing a number of 2 to 50, S representing a sulfur atom and H representing a hydrogen atom; and a monomer expressed by the following formula (4): 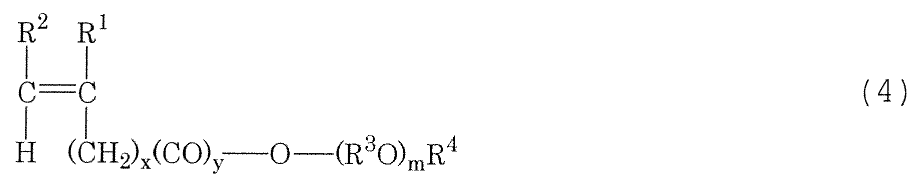 in the formula (4), R¹ and R² being the same or different and each representing a hydrogen atom or a methyl group, x representing a number of 0 to 2, y representing 0 or 1, R³O being the same or different and each representing an oxyalkylene group having 2 to 18 carbon atoms, that is, R³O representing a mixture of one or two or more species of oxyalkylene groups having 2 to 18 carbon atoms, R⁴ representing a hydrogen atom or a hydrocarbon group having 1 to 30 carbon atoms, and m being an average number of moles added of an oxyalkylene group and representing a number of 1 to 300.

The present invention also is a composition using as a cement admixture including a polycarboxylic acid polymer having a main chain comprising a constituent unit expressed by the following formula (1): 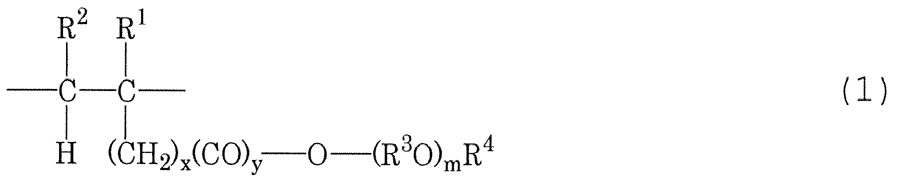 in the formula (1), R¹ and R² being the same or different and each representing a hydrogen atom or a methyl group, x representing a number of 0 to 2, y representing 0 or 1, R³O being the same or different and each representing an oxyalkylene group having 2 to 18 carbon atoms, R⁴ representing a hydrogen atom or a hydrocarbon group having 1 to 30 carbon atoms, and m being an average number of moles added of an oxyalkylene group and representing a number of 1 to 300, wherein the polymer has a ratio (Mw2/Mw1) of a weight average molecular weight (Mw2) measured using a light scattering detector to a weight average molecular weight (Mw1) measured using a differential refractive index detector of 2.5 or less.

Further, the present invention also is the composition using as a cement admixture including the polycarboxylic acid polymer, wherein the weight average molecular weight (Mw2) measured using the light scattering detector is 35000 or less and the ratio (Mw2/Mw1) of the weight average molecular weight (Mw2) measured using the light scattering detector to the weight average molecular weight (Mw1) measured using the differential refractive index detector is 2.1 or less.

The present invention also is a composition using as a cement composition comprising the cement admixture and cement.

The present invention also is a method for producing the polycarboxylic acid polymer for a cement admixture, comprising a step of polymerizing the monomer components comprising the polyfunctional mercaptan expressed by the above formula (3) and the monomer expressed by the above formula (4).

The present invention also is the method of producing a polycarboxylic acid polymer for a cement admixture, wherein R⁵ is a hydrogen atom and α is 1 in the formula (3).

### DETAILED DESCRIPTION OF THE INVENTION

Hereinafter, the present invention will be described in detail.

The polycarboxylic acid polymer for the composition as a cement admixture of the present invention is a polymer which has two or more carboxylic acids or carboxylic acid salts in a molecule and is formed by introducing a specific structure expressed by the above-mentioned formula (1) into a site constituting the foregoing polymer and further has a branched structure on its main chain.

Examples of the above-mentioned branched structure include <1> a radially branched structure, that is, a structure
in which a polymer chain extends from a certain site as a base point; and <2> a comb-like structure in which a polymer chain as a side chain extends from a polymer chain as a main chain. Each of the polymer chain as the main chain and the polymer chain as the side chain in the branched structure <2> is not a polyalkylene glycol chain in the formula (1) but a polymer chain prepared by polymerizing the monomer expressed by the formula (1) and the like. Among them, the <1> radially branched structure is preferred.

A structure in which a compound having a polyfunctional group and a plurality of chains are covalently bonded may be mentioned as the above-mentioned <1> radially branchedstructure. For example, a structure obtained by polymerizing a polyfunctional mercaptan and a monomer may be mentioned. In this case, the compound having a polyfunctional group is a structure site serving as a base point, and a monomer component containing the monomer expressed by the formula (1) is polymerized with the site, and thereby a polymer in which a plurality of polymer chains are bonded is formed.

A polyoxyalkylene chain (R³O)ₘ expressed by the number of repetitions of m in the foregoing formula (1) is a substance formed by adding 1 to 300 mixtures of one or more species of oxyalkylene groups having 2 to 18 carbon atoms per a molecule of polymer on the average.

Particularly, when a highly hydrophobic oxyalkylene group having 3 or more carbon atoms is contained in an amount 0.01 to 49% by mole as a part of the foregoing polyoxyalkylene chain and the other portion is a highly hydrophilic oxyalkylene group having 2 carbon atoms or oxyethylene group, it is preferred since a polycarboxylic acid polymer for a cement admixture becomes the polycarboxylic acid polymer for a composition as a cement admixture of the present invention which is more superior in a water reducing property and workability. The content of the oxyalkylene group having 3 or more carbon atoms may be any value between 0.01% by mole and 49% by mole but it is preferably 0.1 to 40% by mole, furthermore preferably 0.5 to 30% by mole, particularly preferably 1 to 25% by mole, and most preferably 2 to 20% by mole.

A subscript m in the foregoing formula (1) is a number of 1 to 300, and when the value of m is more than 300, the viscosity of the cement composition becomes high and the workability may be deteriorated. Particularly when the viscosity of a cement composition is regarded as important, a length of an alkyleneoxide chain is desirably short to some extent and therefore the value of m is preferably 1 to 100, furthermore preferably 1 to 75, and most preferably 1 to 50. And, in order to decrease an amount of the foregoing cement admixture to be added, the length of an alkyleneoxide chain is desirably long to some extent and therefore the value of m is preferably 2 to 50, furthermore preferably 4 to 50, and most preferably 10 to 50. When both the viscosity of a cement composition and the water reducing property are especially regarded as important, the value of m is particularly preferably 15 to 25.

R⁴ preferably represents a hydrogen atom or a hydrocarbon group having 1 to 20 carbon atoms and more preferably represents a methyl group.

And, when the foregoing polyoxyalkylene chain is one expressed by the following formula (5), it is preferred since an effect of a highly hydrophobic oxyalkylene group having 3 or more carbon atoms is further clearly developed.

-(C₂H₄O)ₒ(R⁶O)ₚ-(C₂H₄O)_{q}- (5)

A polyoxyalkylene chain expressed by the number of repetitions of o, p, and q in the foregoing formula (5) is in the form of the so-called A-B-A type block copolymer, and when this specific structure is contained, a hydrophilic block highly exerts a water reducing property and a hydrophobic block provides more workability, and therefore amore excellent cement admixture can be obtained.

Subscripts o and q in the above formula (5) are the same or different and are numbers of 0 to 300, and when the values of them are more than 300, the viscosity of the cement composition becomes high and the workability may be deteriorated and therefore the values of o and q are preferably 0 to 200, more preferably 1 to 100, furthermore preferably 1 to 60, and most preferably 1 to 40. A subscript p is a number of 1 to 50, and when p is more than 50, a water reducing property of the polycarboxylic acid polymer for a composition as a cement admixture of the present invention may be deteriorated or a hydrophobic property thereof may be heightened and therefore the polycarboxylic acid polymer for a cement admixture may not be compatible with mixing water to be mixed in cement, resulting in low workability. The value of p is preferably 1 to 20, more preferably 1 to 10, furthermore preferably 1 to 6, and most preferably 1 to 4. The value of o+p+q, which is the total of o, p and q, is a number of 3 to 300, and when it is more than 300, the viscosity of the cement composition may become high and the workability may be deteriorated, and each R⁶ is the same or different, represents an alkylene group having 3 to 18 carbon atoms and is preferably a 2-methylethylene group (generally, propylene oxide is a precursor) having 3 carbon atoms.

A constituent unit expressed by the foregoing formula (1) or a site in which R³O in the foregoing formula (1) is the foregoing formula (5) preferably makes up 10 to 99% by weight of the total weight of the polycarboxylic acid polymer for a composotion as a cement admixture of the present invention, more preferably makes up 20 to 97% by weight, furthermore preferably 30 to 95% by weight, and most preferably 40 to 90% by weight.

The polycarboxylic acid polymer for a composition as a cement admixture of the present invention is most characterized by having a branched structure on its main chain as an essential condition. A conformation of the branched structure and number of branches are not particularly limitedbut a branched structure expressed by the foregoing formula (2) is preferred.

(R⁵OX)_{α} in the foregoing formula (2) represents a conformation (A) of a branched main chain and X represents an alkylene group having 1 to 30 carbon atoms. R⁵, O, and X are bonded like R⁵-O-X-. OX represents an oxyalkylene group having a carbon atom of 1 to 30. R⁵ represents a hydrogen atom or an alkyl group having 1 to 30 carbon atoms. Y represents a center of a branched structure and either a carbon atom or a hydrocarbon group having 1 to 30 carbon atoms. The above-mentioned hydrocarbon group has a valency of α+β. (Z-S-P)_{β} represents a conformation (B) of a branched main chain and Z represents an alkylene group or ester having 1 to 30 carbon atoms. A subscript α represents a number of 0 to 25 and a subscript β represents a number of 2 to 50. S represents a sulfur atom and P represents a polycarboxylic acidpolymer for a cement admixture containing a site expressed by the foregoing formula (1) as an essential component.

If R⁵ in the foregoing conformation (A) of a branched main chain is a hydrogen atom, it is preferred since the hydrophilic property of the polycarboxylic acid polymer for a composition as a cement admixture of the present invention becomes large.

α representing number of branched main chains of the foregoing conformation (A) of a branched main chain is a number of 0 to 25, but when α is preferably 0 to 20, more preferably 0 to 15, furthermore preferably 0 to 10 and most preferably 0 to 5, it is more preferred because the capability of dispersing in cement is enhanced.

β representing number of branched main chains of the foregoing conformation (B) of a branched main chain is a number of 2 to 50 and when it is too many, a steric distance between the branched main chains in the polycarboxylic acid polymer for a composition as a cement admixture of the present invention becomes near and entanglement in a molecule tends to occur, and consequently this makes it impossible for the polymer to freely adsorb to cement. When β is preferably 2 to 25, more preferably 2 to 10, furthermore preferably 2 to 8, it is preferred because there is not entanglement in a molecule and the branched main chain can effectively exert the dispersibility in cement. When β representing number of branched main chains is too few, an advantage of a branched structure, that is, an advantage that a polymer can act on a plurality of cement particles in different directions becomes less, and therefore β is most preferably 4 to 8.

When α representing number of branched main chains of the foregoing conformation (A) of a branched main chain is smaller than β representing number of branched main chains of the foregoing conformation (B) of a branched main chain, it is preferred because the capability of dispersing in cement of the polycarboxylic acid polymer for a composition as a cement admixture of the present invention becomes large. The difference between α and β or β-α is 2 to 50, but when β-α is preferably 2 to 25, more preferably 2 to 10, and furthermore preferably 2 to 8 in consideration of the case where β is less than 50 as described previously, it is preferred because the capability of dispersing in cement of the polycarboxylic acid polymer for a composition as a cement admixture of the present invention becomes large further.

With respect to the weight-average molecular weight of the polycarboxylic acid polymer for a composition as a cement admixture of the present invention which is an essential component, the polymer preferably has a weight-average molecular weight (Mw1) measured using a differential refractive index detector on the polyethylene glycol equivalent basis measured by gel permeation chromatography (hereinafter, referred to as "GPC") of 1000 to 1000000. When it is regarded as important that an amount of the cement admixture composition of the present invention to be added is reduced, the weight-average molecular weight Mw1 is more preferably 3000 to 1000000, furthermore preferably 5000 to 1000000, and most preferably 7000 to 1000000. Further, when the viscosity of the cement composition is regarded as important, Mw1 is more preferably 7000 to 500000, furthermore preferably 7000 to 100000, and most preferably 7000 to 50000.

Further, the following embodiments are mentioned as the preferable embodiments of the polycarboxylic acid polymer for a composition as a cement admixture of the present invention:
the polycarboxylic acid polymer for a cement admixture having a main chain comprising a constituent unit expressed by the formula (1) has a weight average molecular weight (Mw1) measured using a differential refractive index detector of 80000 or more when having a weight average molecular weight (Mw2) measured using a light scattering detector of 200000 or less; the above-mentioned Mw1 is 44000 or more when the above-mentioned Mw2 is 110000 or less; the above-mentioned Mw1 is 28000 or more when the above-mentioned Mw2 is 70000 or less; the above-mentioned Mw1 is 22000 or more when the above-mentioned Mw2 is 55000 or less; and the above-mentioned Mw1 is 14000 or more when the above-mentioned Mw2 is 35000 or less.

[Conditions of GPC molecular weight measurement (1)]
Used column: TSKguardcolumn SWXL+TSKgel
G4000SWXL+G3000SWXL+G2000SWXL which is a product of TOSOH Corporation
Eluent: 115.6 g of sodium acetate trihydrate is dissolved in a mixed solvent of 10999 g of water and 6001 g of acetonitrile and further the resulting solution is adjusted to pH 6.0 with acetic acid to form an eluent.
Injection rate: 100 µl of a 0.5% eluent solution
Eluent flow rate: 0.8 ml/min.
Column temperature: 40°C
Reference material: polyethylene glycol, a peak top molecular weight (Mp) 272500, 219300, 85000, 46000, 24000, 12600, 4250, 7100, 1470
Order of calibration curve: cubic equation
Detector: differential refractive index detector model 410 manufactured by Nihon Waters K.K.
Analysis software: MILLENNIUM Ver.3.21 manufactured by Nihon Waters K.K.

[Conditions of GPC molecular weight measurement (2)]
Used column: TSKguardcolumn which is a product of TOSOH
Corporation, each one α+TSKgel, α-5000+TSKgel, α-4000+TSKgel, and α-3000 are connected.
Used eluent: a solution prepared by mixing acetonitrile 2000 g with a solution prepared by dissolving sodium
dihydrogenphosphate·2H₂O 62.4g and disodium
hydrogenphosphate·12H₂O 143.3g in ion exchange water 7794.3 g. Detector: triple detector Model 302, product of Viscotek Corp.
Light scattering detector:
Right angle light scattering: scattering angle of 90°,
Low angle light scattering: scattering angle of 7°,
Cell capacity: 18 µL,
Wavelength: 670 nm
Standard sample: Polyethylene glycol SE-8 (Mw107000) which is a product of TOSOH Corp. is used; the dn/dC is defined as 0.135 ml/g; and the refractive index of the used eluent is defined as 1.333. Thereby, the device constant is determined.
Injection rate:
Standard sample: 100 µL of the solution into which the polymer is dissolved in the above-mentioned eluent such that the polymer concentration is 0.2 vol% is injected.
Sample: 100 µL of the solution into which the polymer is dissolved in the above-mentioned eluent such that the polymer concentration is 1.0 vol% is injected.
Eluent flow rate: 0.8 ml/min.
Column temperature: 40°C

The polycarboxylic acid polymer for a composition as a cement admixture of the present invention may be a polymer having a constituent unit expressed by the foregoing formula (1) and two ormore carboxylic acids or carboxylic acid salts in a molecule and having a branched structure on its main chain and a path of synthesizing the polycarboxylic acid polymer is no object, but if an example of a synthesis path of the polycarboxylic acid polymer for a composition as a cement admixture of the present invention is given, for example, the following synthesis path can be given.

### [Example of a synthesis path of the polycarboxylic acid polymer for a composition as a cement admixture of the present invention]

The synthesis of the polycarboxylic acid polymer for a composition as a cement admixture of the present invention may be done by polymerizing monomer components comprising a polyfunctional mercaptan expressed by the foregoing formula (3) and a monomer expressed by the foregoing formula (4), and other monomers may be contained in the monomer components without limit. If a specific example is further given, the polycarboxylic acid polymer for a composition as a cement admixture of the present invention can be obtained by polymerizing one or more species of the polyfunctional mercaptans expressed by the foregoing formula (3), one or more species of the monomers expressed by the foregoing formula (4), and one or more species of monomers having carboxylic acid or carboxylic acid salt and a polymerizable double bond in a molecule. When the carboxylic acid salt is used in the above polymerization, for example, alkali metal salt, alkaline earth metal salt or ammonium salt may be used and a monomer of the carboxylic acid salt of these salts may be polymerized, or salt may be formed after polymerizing a monomer of carboxylic acid. The polyfunctional mercaptan expressed by the foregoing formula (3) acts as an initiator or a chain transfer agent during a polymerization reaction and becomes an end of polymer chain by a reaction with one or more species of the monomers expressed by the foregoing formula (4) or one or more species of monomers having carboxylic acid or carboxylic acid salt and a polymerizable double bond in amolecule. The polyfunctional mercaptan expressed by the foregoing formula (3) bonds to the constituent unit expressed by the foregoing formula (1) by the above reaction and the polycarboxylic acid polymer for a composition as a cement admixture of the present invention expressed by the foregoing formula (2) can be obtained.

As a method of adding the polyfunctional mercaptan expressed by the foregoing formula (3) to a reaction container, a sequential charging method such as adding dropwise and divided charge can be applied. And, the polyfunctional mercaptan expressed by the foregoing formula (3) may be introduced alone in the container or may be mixed with a monomer or a solvent in advance. The above-mentioned method of polymerizing can be carried out by a batch processing or a continuous processing.

A subscript m in the foregoing formula (4) represents an average number of moles added of an oxyalkylene group and is 3 to 300, but particularly when the viscosity of a cement composition is regarded as important, a length of an alkyleneoxide chain is desirably short to some extent and therefore the value of m is preferably 1 to 100, furthermore preferably 1 to 75, and most preferably 1 to 50. And, in order to decrease an amount of a cement admixture to be added, a length of an alkyleneoxide chain is desirably long to some extent and therefore the value of m is preferably 2 to 50, furthermore preferably 4 to 50, and most preferably 10 to 50. When both the viscosity of a cement composition and the water reducing property of a cement composition are particularly regarded as important, the value of m is particularly preferably 15 to 25.

R⁴ represents a hydrogen atom or a hydrocarbon group having 1 to 20 carbon atoms and is preferably a methyl group.

And, when one or more species of the polyfunctional mercaptans expressed by the foregoing formula (3), one or more species of the monomers expressed by the following formula (6), and one or more species of monomers having carboxylic acid or carboxylic acid salt and a polymerizable double bond in amolecule are polymerized, the polycarboxylic acid polymer for a composition as a cement admixture of the present invention which is more superior in a water reducing property and workability can be obtained.

When the carboxylic acid salt is used in the above polymerization, for example, alkali metal salt, alkaline earth metal salt or ammonium salt is used and a monomer of the carboxylic acid salt of these salts may be polymerized, or salt may be formed after polymerizing a monomer of carboxylic acid. 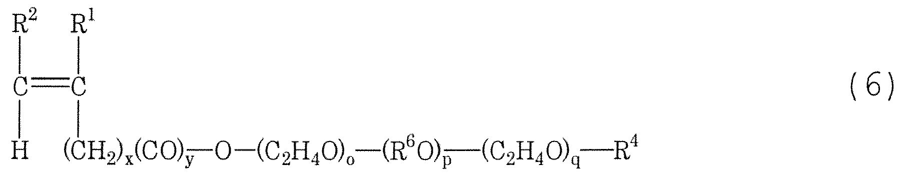 wherein R⁶ represents an alkylene group having 3 to 18 carbon atoms, and each of o and q is an average number of moles added of an oxyethylene group and represents a number of 0 to 300 and when one of o and q is 0, the other becomes 2 to 300, p represents an average number of moles added of an oxyalkylene group and is a number of 1 to 50, o+p+q is a number of 3 to 300, and R⁴ represents a hydrogen atom or a hydrocarbon group having 1 to 20 carbon atoms.

Subscripts o and q in the above formula (6) are the same or different and are numbers of 0 to 300, and when the values of them are more than 300, the viscosity of a cement composition becomes high and the workability may be deteriorated and therefore the values of o and q are preferably 0 to 200, more preferably 1 to 100, furthermore preferably 1 to 60, and most preferably 1 to 40. A subscript p is a number of 1 to 50, and when p is more than 50, a water reducing property of the polycarboxylic acid polymer for a composition as a cement admixture of the present invention may be deteriorated or a hydrophobic property thereof may be heightened and therefore the polycarboxylic acid polymer for a cement admixture may not be compatible with mixing water to be mixed in cement, resulting in low workability. The value of p is preferably 1 to 20, more preferably 1 to 10, furthermore preferably 1 to 6, and most preferably 1 to 4. The value of o+p+q, which is the total of o, p and q, is a number of 3 to 300, and when it is more than 300, the viscosity of a cement composition becomes high and the workability may be deteriorated. Particularly when the viscosity of a cement composition is regarded as important, a length of an alkyleneoxide chain is desirably short to some extent and therefore the value of o+p+q is preferably 1 to 100, furthermore preferably 1 to 75, and most preferably 1 to 50. And, in order to decrease an amount of a cement admixture to be added, a length of an alkyleneoxide chain is desirably long to some extent and therefore the value of o+p+q is preferably 2 to 50, furthermore preferably 4 to 50, and most preferably 10 to 50. When both the viscosity of a cement composition and the water reducing property of a cement composition are particularly regarded as important, the value of o+p+q is particularly preferably 15 to 25.

The polyfunctional mercaptan expressed by the foregoing formula (3) may be any one as long as it has 2 to 50 SH groups, and if an example of the case where α is 0 is given, the polyfunctional mercaptan expressed by the foregoing formula (3) includes, for example, diesters of diol such as ethylene glycol, 1,4-butanediol or the like and carboxyl group-containing mercaptans; polyester compounds of a compound having three or more hydroxyl groups such as trimethylolpropane, pentaerythritol, dipentaerythritol or the like and carboxyl group-containing mercaptans; compounds having three or more mercapto groups such as trithioglycerin and the like; triazine polyvalent thiols such as 2-di-n-butylamino-4,6-dimercapto-S-triazine, 2,4,6-trimercapto-S-triazine and the like; compounds formed by introducing a plurality of mercapto groups into a plurality of epoxy groups of a polyvalent epoxy compound by adding hydrogen sulfide to a plurality of epoxy groups; and ester compounds formed by esterifying a plurality of carboxyl groups of polyvalent carboxylic acid and mercaptoethanol. Here, carboxyl group-containing mercaptans may be any one as long as they are compounds having one or more mercapto groups and one or more carboxyl groups, and if an example is given, thioglycolic acid, mercaptopropionic acid and thiosalicylic acid are given.
Accordingly, an example of the polyfunctional mercaptan of the present invention in the case where α is 0 as described above includes trimethylolpropane trithioglycolate, trimethylolpropane trithiopropionate, pentaerythritol tetrakis-thioglycolate, pentaerythritol tetrakis-thiopropionate, dipentaerythritol hexakis-thioglycolate, and dipentaerythritol hexakis-thiopropionate.

And, in the polyfunctional mercaptan expressed by the foregoing formula (3), an example of the case where α is 0.1 to 25 is given. When carboxyl group-containing mercaptans are reacted with the foregoing diols or compounds having three or more hydroxyl groups, if number of moles of carboxyl group-containing mercaptans to be reacted, which is less than number of moles of the hydroxyl group of the foregoing diols or compounds having three or more hydroxyl groups, is used, an unreacted R⁵OX remains. More specifically, when reacting thioglycolic acid in an amount of 0.9 moles or less with 1 mole of the hydroxyl group of trimethylolpropane, more preferably in an amount of 0.67 moles or less, and reacting thioglycolic acid in an amount of 0. 9 moles or less with 1 mole of the hydroxyl group of pentaerythritol, more preferably in an amount of 0.75 moles or less, and reacting thioglycolic acid in an amount of 0.9 moles or less with 1 mole of the hydroxyl group of dipentaerythritol, more preferably in an amount of 0.83 moles or less, a hydroxyl group can be preserved to some extent. The polyfunctional mercaptan thus obtained is preferably easily dissolved in a synthetic system when the polycarboxylic acid polymer for a composition as a cement admixture of the present invention is synthesized in an aqueous solvent because it has a higher hydrophilic property than that of the polyfunctional mercaptan in the case where α is 0.

Y in the above-mentioned formula (3) represents the center of the branched structure, and represents either a carbon atom or a hydrocarbon group having 1 to 30 carbon atoms. The above-mentioned hydrocarbon group has a valency of α+β.

It is preferable that R⁵ is a hydrogen atom and α is 1 in the above-mentioned formula (3).

The above descriptions are summed up that from the viewpoint of number of branched main chains and number of remaining hydroxyl groups, a mixture of one or more species selected from a substance formed by adding thioglycolic acid in an amount of 0.75 to 0.50 moles to 1 mole of the hydroxyl group of pentaerythritol and a substance formed by adding thioglycolic acid in an amount of 0.83 to 0.67 moles to 1 mole of the hydroxyl group of dipentaerythritol is most preferred as the polyfunctional mercaptan expressed by the foregoing formula (3).

Monomers expressed by the foregoing formulas (4) and (6) can be obtained by adding ethylene oxides of certain number of repetitions and alkyleneoxides of certain number of repetitions having 3 to 18 carbon atoms to unsaturated alcohol or unsaturated carboxylic acid. Or, the foregoing monomers expressed by the foregoing formulas (4) and (6) can also be obtained by an ester reaction of alcohol, which is obtained by adding ethylene oxides of certain number of repetitions and alkyleneoxides of certain number of repetitions having 3 to 18 carbon atoms to alcohols or phenols having a hydrocarbon group having 1 to 20 carbon atoms, and unsaturated carboxylic acid, or by a transesterification reaction of the foregoing alcohol with unsaturated carboxylate.

Examples of the above-mentioned unsaturated alcohol include vinyl alcohol, allyl alcohol, methallyl alcohol, 3-butene-1-ol, 3-methyl-3-butene-1-ol, 3-methyl-2-butene-1-ol, 2-methyl-3-butene-2-ol, 2-methyl-2-butene-1-ol and 2-methyl-3-butene-1-ol. And, examples of the above-mentioned unsaturated carboxylic acid include acrylic acid and methacrylic acid, and as the above-mentioned unsaturated carboxylate, alkyl ester of the above-mentioned unsaturated carboxylic acid can be used. Alkyleneoxide having 3 to 18 carbon atoms includes propylene oxide, butylene oxide and epoxidized products of unsaturated hydrocarbon, but propylene oxide is preferred. Alcohols or phenols having a hydrocarbon group having 1 to 20 carbon atoms include alkyl alcohols such as methanol, ethanol, butanol and the like; alcohols having an aryl group such as benzyl alcohol; and phenols such as phenol, p-methylphenol and the like, but alcohols having 1 to 3 carbon atoms such as methanol, ethanol, butanol and the like are preferred.

A monomer having carboxylic acid or carboxylic acid salt and a polymerizable double bond in a molecule, with which monomers expressed by the foregoing formulas (4) and (6) are copolymerized, includes, for example, a monomer expressed by the following formula (7): 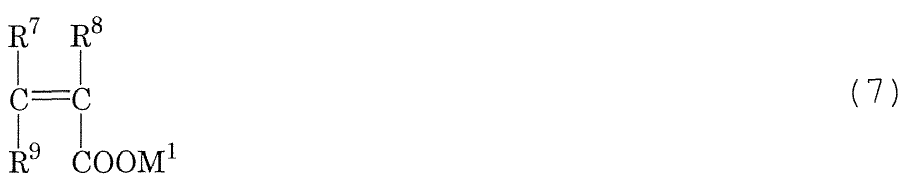 wherein R⁷, R⁸ and R⁹ are the same or different and represent hydrogen atoms, methyl groups or -(CH₂)zCOOM², z represents a number of 0 to 2. A group -(CH₂)zCOOM² may form an anhydride together with COOM¹ or another -(CH₂)zCOOM². M¹ and M² are the same or different and represent hydrogen atoms, alkali metal atoms, alkaline earth metal atoms, ammonium groups or organic amine groups. A monomer expressed by the foregoing formula (7) includes acrylic acid, methacrylic acid, maleic acid, itaconic acid, citraconic acid, fumaric acid, and monovalent metal salt, divalent metal salt, ammonium salt and organic amine salt thereof, and anhydrides thereof.

When the polycarboxylic acid polymer for a composition as a cement admixture of the present invention is obtained by copolymerizing a monomer (a) expressed by the foregoing formula (4) and/or a monomer (b) expressed by the foregoing formula (6), and a monomer (c) expressed by the foregoing formula (7), the content of (a) and/or (b) is preferably 10 to 95% by weight regarding the total weight of the polycarboxylic acid polymer for a cement admixture as 100% by weight, more preferably 20 to 80% by weight, furthermore preferably 30 to 70% by weight, and most preferably 40 to 60% by weight. And, the content of (c) in the case of obtaining the foregoing polycarboxylic acid polymer for a cement admixture is preferably 5 to 50% by weight, more preferably 5 to 40% by weight, furthermore preferably 10 to 40% by weight, and most preferably 10 to 30% by weight.

And, a monomer other than monomers (a), (b), (c) may be used as the copolymerization component and an amount thereof to be used is 0 to 50% by weight regarding the total weight of the monomer (a) and/or the monomer (b) and/or the monomer (c) as 100% by weight, and as the monomer other than monomers (a), (b), (c), for example, one or more species of styrene, (meth)acrylates, acrylonitrile, acrylamide, (meth)allyl sulfonate, 2-(meth)acryloxyethyl sulfonate, 3-(meth)acryloxypropyl sulfonate, 3-(meth)acryloxy-2-hydroxypropyl sulfonate, 3-(meth)acryloxy-2-hydroxypropyl sulfophenyl ether, 3-(meth)acryloxy-2-hydroxypropyl oxysulfo benzoate, 4-(meth)acryloxybutyl sulfonate, (meth)acrylamidomethyl sulfonic acid, (meth)acrylamidoethyl sulfonic acid and (meth)acrylamido-2-methyl propane sulfonic acid can be used.

The present invention also is a composition as a cement admixture including a polycarboxylic acid polymer comprising a constituent unit expressed by the above formula (1), wherein the polymer has a ratio (Mw2/Mw1) of a weight average molecular weight (Mw2) measured using a light scattering detector to a weight average molecular weight (Mw1) measured using a differential refractive index detector of 2.5 or less.

The reason why the molecular weights of one polymer are different depending on the detector in GPC measurement is mentioned below.

The light scattering detector can measure the absolute molecular weight because the detected scattering strength is not influenced by spread degree of the polymer. On the other hand, in the differential refractive index detector (RI), the refractive index varies depending on the spread degree of the polymer chain, and a polymer having an shrinking main chain is detected to have a low molecular weight.

In the present description, the weight average molecular weight measured by the differential refractive index detector (RI) is also referred to as Mw1; and the weight average molecular weight measured by the light scattering detector is also referred to as Mw2. Polymers which can be freely flexed because of the straight main chain (for example, polymers in Comparative Examples 1 to 3) shrink and get considerably smaller in the measurement solution in the polymer weight average molecular weight measurement method using the differential refractive index detector (RI). On the other hand, polymers having a steric limitation because of the plural main chains radially extend from the center of the branched structure (for example, polymers in Examples 1 to 4) can not shrink to the level of the above-mentioned polymers which can be freely flexed.

From the opposite point of view, the polymers having a branched structure have a polymer chain which relatively widely spreads as compared with the straight polymers having the equivalent absolute molecular weight, in the solution under GPC conditions in the polymer weight average molecular weight measurement method using the differential refractive detector (RI). Therefore, such polymers having a branched structure can effectively coat the cement surface, and therefore the cement is dispersed well. And such polymers have no need to have a large absolute molecular weight more than necessary because of the large spread of the polymer main chain. Therefore, the polymer chain hardly entwines and thereby the state of the concrete becomes well.

From the above circumstances, polymers having a smaller ratio of the weight average molecular weight (Mw2) measured by the weight average molecular weight measurement method (2) to the weight average molecular weight (Mw1) measured by the weight average molecular weight measurement method (1), that is, polymers having a smaller (Mw2)/(Mw1) have a widely spreading polymer chain in the solution, which has close relation to improvement in the state of the concrete and slump maintaining capacity.

It is preferable that the weight average molecular weight (Mw2) measured using the light scattering detector is 35000 or less and the ratio (Mw2/Mw1) of the weight average molecular weight (Mw2) measured using the light scattering detector to the weight average molecular weight (Mw1) measured using the differential refractive index detector is 2.1 or less, because the state of the concrete becomes more excellent.

The present invention also is a production method of the composition as a cement admixture including a polycarboxylic acid polymer, wherein the monomer components comprising the polyfunctional mercaptan expressed by the above formula (3) and the monomer expressed by the above formula (4) are polymerized.

The polycarboxylic acid polymer for a composition as a cement admixture of the present invention can be obtained by polymerizing these monomers together with the polyfunctional mercaptan expressed by the foregoing formula (3), and as a polymerization method, publicly known methods such as aqueous solution polymerization, polymerization in an organic solvent, emulsion polymerization, bulk polymerization and the like can be used by using an initiator, and a chain transfer agent other than the polyfunctional mercaptan expressed by the foregoing formula (3) as required.

The above-mentioned preferred embodiments of the above-mentioned polyfunctional mercaptan expressed by the above formula (3) and the above-mentioned monomer expressed by the above formula (4) may be mentioned as the polyfunctional mercaptan expressed by the above formula (3) and the monomer expressed by the above formula (4) preferably used in the production method of the present invention.

For example, the preferable embodiments of the production method of the polycarboxylic acid polymer for a composition as a cement admixture of the present invention include an embodiment
in which R⁵ is a hydrogen atom and α is 1 in the above formula (3).

As the above-mentioned initiator, a publicly known initiator can be used and persulfates such as ammoniumpersulfate, sodium persulfate and potassium persulfate;hydrogen peroxide; azo compounds such as azobis-2methylpropionamidine hydrochloride and azoisobutylonitrile; and peroxides such as benzoyl peroxide, lauroyl peroxide and cumene hydroperoxide are preferable. And, as an accelerator, reducing agents such as sodium hydrogensulfite, sodium sulfite, Mohr's salt, sodium pyrobisulfite, sodium formaldehyde sulphoxylate, ascorbic acid and erythorbic acid; or amine compounds such as ethylenediamine, sodium ethylenediaminetetraacetate and glycine are used in combination. These initiators and accelerators may be used alone or in combination of two or more species.

In the above-mentioned polymerization method, a chain transfer agent other than the polyfunctional mercaptan expressed by the foregoing formula (3) can be used as required. As such a chain transfer agent, one or more species of publicly known agents can be used, and a hydrophobic chain transfer agent includes monovalent thiol chain transfer agents such as butanethiol, octanethiol, decanethiol, dodecanethiol, hexadecanethiol, octadecanethiol, cyclohexyl mercaptan, thiophenol, octyl thioglycolate, octyl 2-mercaptopropionate, octyl 3-mercaptopropionate, mercaptopropionic acid 2-ethylhexyl ester, 2-mercaptoethyl octanoate, 1,8-dimercapto-3,6-dioxaoctane, decanetrithiol and dodecylmercaptan; halides such as carbon tetrachloride, carbon tetrabromide, methylene chloride, bromoform and bromotrichloroethane; and unsaturated hydrocarbon compounds such as α-methylstyrene dimmer, α-terpinene, γ-terpinene, dipentene and terpinolene. One or two or more species of these compounds can be used. And, a hydrophilic chain transfer agent includes thiol chain transfer agents such as mercaptoethanol, thioglycerol, thioglycolic acid, mercaptopropionic acid, 2-mercaptopropionic acid, 3-mercaptopropionic acid, thiomalic acid and 2-mercaptoethane sulfonate; primary alcohols such as 2-aminopropane-1-ol and the like; secondary alcohols such as isopropanol and the like; lower oxides and salts thereof such as phosphorous acid, hypophosphorous acid and salts thereof (sodium hypophosphite, potassium hypophosphite, etc.), sulfurous acid, hydrogen sulfite, dithionic acid, metahydrogensulfurous acid and salts thereof (sodium sulfite, sodium hydrogensulfite, sodium dithionite, sodium metabisulfite, potassium sulfite, potassium hydrogensulfite, potassium dithionite, potassium metabisulfite, etc.), and one or more species of these compounds can be used.

As a method of adding the above-mentioned chain transfer agent to a reaction container, a sequential charging method such as adding dropwise and divided charge can be applied. And, the chain transfer agent may be introduced alone in the reaction container or may be mixed with a monomer or a solvent in advance. The above-mentioned method of polymerizing can be carried out by a batch processing or a continuous processing.

And, as a solvent used as required in polymerization, publicly known solvents can be used and examples of the solvents include water; alcohols such as methyl alcohol, ethyl alcohol, isopropyl alcohol and the like; aromatic or aliphatic hydrocarbons such as benzene, toluene, xylene, cyclohexane, n-heptane and the like; esters such as ethyl acetate and the like; and ketones such as acetone, methyl ethyl ketone and the like, and one or more species of these solvents may be used. Among others, one or more species of solvents selected from the group consisting of water and lower alcohols having 1 to 4 carbon atoms are preferably used from the viewpoint of the solubility of monomers and a polycarboxylic acid polymer to be obtained.

In the above-mentioned polymerization method, as a method of adding polyfunctional mercaptan expressed by the foregoing formula (3), monomers and an initiator and the like to a reaction container, a method of performing copolymerization by charging all of monomers into the reaction container and adding the initiator to the reaction container; a method of performing polymerization by charging a part of monomers into the reaction container and adding the initiator and the remainder of the monomers to the reaction container; and a method of charging a polymerization solvent into the reaction container and adding all of the monomers and the initiator to the reaction container are preferable. Among these methods, it is preferred to perform the polymerization by a method in which the polyfunctional mercaptan expressed by the foregoing formula (3), the initiator and the monomers are added dropwise successively to the reaction container because a molecular weight distribution of a polymer to be obtained can be narrowed (sharpened) and a dispersing property in cement, which is an effect of enhancing the fluidity of the cement composition, can be improved. And, it is preferred to perform the copolymerization reaction maintaining the concentration of a solvent in the reaction container below 80% during the polymerization since the polymerizing property of the monomers is improved and the storage stability of a polymer to be obtained is more improved. The concentration of a solvent is more preferably below 70% and furthermore preferably below 60%.

In the above-mentioned polymerization method, polymerization conditions such as a polymerizing temperature are appropriately set depending on a polymerization method to be employed, a solvent, an initiator, and a chain transfer agent, and it is preferred that the polymerizing temperature is usually above 0°C and below 200°C. When the solvent is not used, it is preferredbecause the polymerizing temperature canbe relatively increased and if polymerization is carried out at 100 to 200°C, a SH group of the polyfunctional mercaptan expressed by the foregoing formula (3) is thermally decomposed and acts as an initiator and therefore a branched structure can be efficiently introduced. The polymerizing temperature is further preferably 100 to 150°C from the viewpoint of facilitating controlling a polymerization reaction and particularly preferably 120 to 150°C from the viewpoint of improving productivity. When the solvent is used, the polymerizing temperature is more preferably 0 to 120°C because if the temperature is too high, volatilization of a solvent and a chain transfer to a solvent are apt to occur. The polymerizing temperature is particularly preferably 40 to 120°C for improving productivity. When water is employed as a solvent, the polymerizing temperature is most preferably 40 to 95°C.

The polycarboxylic acid polymer for a composition as a cement admixture of the present invention obtained by the above-mentioned method is used as a main component of a cement admixture as-is, but it may be further neutralized with an alkali substance and used as required. As the alkali substance, hydroxide or chloride of a monovalent metal or a bivalent metal, or inorganic salt such as carbonate salt of a monovalent metal or a bivalent metal; ammonia; or organic amine is preferably used.

When the composition using as a cement admixture of the present invention including the foregoing polycarboxylic acid polymer is dissolved in a solvent, a pH of a solution of the polycarboxylic acidpolymer for a cement admixture is preferably 2 to 13, further preferably 3 to 10 from the viewpoint of safe handling, and particularly preferably 4 to 8.

The composition as a cement admixture of the present invention contains the polycarboxylic acid polymer for a cement admixture obtained by the above-mentioned method or the above-mentioned polycarboxylic acid polymer for a cement admixture having a branched structure as an essential component, and the composition as a cement admixture of the present invention is preferably in the form of an aqueous solution for the convenience of handling. And, a polycarboxylic acid polymer other than the polycarboxylic acid polymer of the present invention and other additives may be contained in the composition as a cement admixture of the present invention or may be added when the composition as a cement admixture of the present invention is mixed with cement. As other cement additives, a publicly known cement additive can be used and it includes, for example, the followings.
(I) Water-soluble high polymer materials: unsaturated carboxylic polymer such as polyacrylic acid (sodium polyacrylate), polymethacrylic acid (sodium polymethacrylate), polymaleic acid (sodium polymaleate) and copolymer of acrylic acid/maleic acid sodium salt; a polymer of polyoxyethylene or polyoxypropylene such as polyethylene glycol or polypropylene glycol, or copolymer thereof; nonionic cellulose ethers such as methyl cellulose, ethyl cellulose, hydroxymethyl cellulose, hydroxyethyl cellulose, carboxymethylcellulose, carboxyethylcellulose and hydroxypropyl cellulose; polysaccharides produced by microbial fermentation such as yeast glucan, xanthan gum, β-1,3 glucans (any one of straight chain glucan and branched chain glucan can be used and examples of them include curdlan, paramylon, pachyman, scleroglucan, laminaran); polyacrylamide; polyvinyl alcohol; starch; starch phosphate; sodium alginate; gelatin; a copolymer of acrylic acid having an amino group in a molecule and a quaternized product thereof.
(II) High polymer emulsion: copolymers of vinyl monomers such as (meth)acrylic acid alkyls
(III) Retarders: oxycarboxylic acids and salts thereof such as gluconic acid, glucoheptonic acid, arabinonic acid, malic acid or citric acid and inorganic salts and organic salts thereof such as sodium salt, potassium salt, calcium salt, magnesium salt, ammonium salt and triethanolamine salt thereof; saccharides such as monosaccharides like glucose, fructose, galactose, saccharose, xylose, apiose, ribose and isomerized sugar, oligosaccharide like disaccharide, trisaccharide and dextrin, polysaccharides like dextran, and syrups including these; sugar alcohol such as sorbitol; magnesium silicofluoride; phosphoric acid and salt thereof and boric acid ester; aminocarboxylic acid and salt thereof; alkali-soluble protein; humic acid; tannic acid; phenol; polyhydric alcohol such as glycerin; phosphonic acid and derivatives thereof such as aminotri(methylenephosphonic acid), 1-hydroxyethylidene-1,1-diphosphonic acid, ethylenediaminetetra(methylenephosphonic acid), diethylenetriaminepenta(methylenephosphonic acid), and alkali metal salt and alkaline earth metal salt thereof.
(IV) High early strength agents, accelerators: soluble calcium salts suchas calcium chloride, calciumnitrite, calciumnitride, calcium bromide and calcium iodide; chlorides such as iron chloride and magnesium chloride; sulfate salt; potassium hydroxide;sodium hydroxide;carbonatesalts;thiosulfuric acid salts; formic acid and formic acid salts such as calcium formate; alkanolamine; alumina cement; and calcium aluminate silicate.
(V) Mineral oil antifoamers: kerosene and liquid paraffin.
(VI) Fat and oil antifoamers: biology oil, sesame oil, castor oil and alkylene oxide adducts thereof.
(VII) Fatty acid antifoamers: oleic acid, stearic acid and alkylene oxide adducts thereof.
(VIII) Fatty acid ester antifoamers: glycerin monoricinolate, alkenyl succinic acid derivatives, sorbitol monolaurate, sorbitol trioleate and natural wax.
(IX) Oxyalkylene antifoamers: polyoxyalkylenes such as an addition product of (poly)oxyethylene (poly)oxypropylene; (poly) oxyalkyl ethers such as diethylene glycol heptyl ether, polyoxyethylene oleyl ether, polyoxypropylene butyl ether, polyoxyethylenepolyoxypropylene 2-ethylhexyl ether and a product of addition of oxyethylene oxypropylene to higher alcohol having 12 to 14 carbon atoms; (poly)oxyalkylene(alkyl)aryl ethers such as poly(oxypropylene) phenyl ether and poly(oxyethylene) nonylphenyl ether; acetylene ethers formed by polymerizing by addition of alkyleneoxide to acetylene alcohol such as 2,4,7,9-tetramethyl-5-desine-4,7-diol, 2,5-dimethyl-3-hexine-2,5-diol and 3-methyl-1-butine-3-ol; (poly) oxyalkylene fatty acid esters such as diethylene glycol oleate, diethylene glycol laurate and ethylene glycol distearate; (poly) oxyalkylene sorbitan fatty acid esters such as (poly)oxyethylene sorbitan monolaurate and (poly)oxyethylene sorbitan trioleate; (poly)oxyalkylene alkyl (aryl) ether sulfate salts such as sodium polyoxypropylene methylether sulfate and sodium polyoxyethylene dodecylphenol ether sulfate; (poly)oxyalkylene alkyl phosphates such as (poly)oxyethylene stearyl phosphate; (poly)oxyalkylene alkylamines such as polyoxyethylene laurylamine; and polyoxyalkylene amide.
(X) Alcohol antifoamers: octyl alcohol, hexadecyl alcohol, acetylene alcohol and glycols.
(XI) Amide antifoamers: acrylate polyamine.
(XII) Phosphate antifoamers: tributyl phosphate and sodium octyl phosphate.
(XIII) Metal soap antifoamers: aluminum stearate and calcium oleate.
(XIV) Silicone antifoamers: dimethyl silicone oil, silicone paste, silicone emulsion, organic modified polysiloxane (polyorganosiloxane such as dimethylpolysiloxane), and fluorosilicone oil.
(XV) AE agents: resin soap, saturated or unsaturated fatty acid, sodium hydroxystearate, lauryl sulfate, ABS (alkyl benzenesulfonic acid), LAS (straight chain alkyl benzenesulfonic acid), alkanesulfonate, polyoxyethylene alkylphenyl ether, polyoxyethylene alkylphenyl ether sulfate or salt thereof, polyoxyethylene alkylphenyl ether phosphate or salt thereof, protein materials, alkenyl sulfosuccinate, and α-olefinsulfonate.
(XVI) Other surfactants: aliphatic monohydric alcohols having 6 to 30 carbon atoms in a molecule such as octadecyl alcohol and stearyl alcohol, alicyclic monohydric alcohols having 6 to 30 carbon atoms in a molecule such as abiethyl alcohol, monovalent mercaptans having 6 to 30 carbon atoms in a molecule such as dodecyl mercaptan, alkyl phenols having 6 to 30 carbon atoms in a molecule such as nonyl phenol, amines having 6 to 30 carbon atoms in a molecule such as dodecylamine, polyalkyleneoxide derivatives formed by adding alkyleneoxide such as ethylene oxide and propylene oxide in quantities of 10 moles or more to carboxylic acid having 6 to 30 carbon atoms in a molecule such as lauric acid and stearic acid; alkyldiphenyl ether sulfonate salts which has optionally an alkyl group or an alkoxyl group as a substituent and is formed by an ether linkage of two phenyl groups having a sulfonic group; anionic surfactants; cationic surfactants such as alkylamine acetate and alkyltrimethylammonium chloride; nonionic surfactants; and amphoteric surfactants.
(XVII) Waterproofing agents : fatty acid (salt), fatty acid ester, fats and oils, silicon, paraffin, asphalt and wax.
(XVIII) Rust preventive agents: nitrite salt, phosphate salt and zinc oxide.
(XIX) Crack reducing agents: polyoxyalkyl ethers; alkanediols such as 2-methyl-2,4-pentanediol.
(XX) Expansion materials: ettringite base and coal base.

Examples of other publicly known cement additives (additive materials) include a cement wetting agent, a thickner, a segregation reducing agent, a flocculant, a dry shrinkage reducing agent, a strength enhancement agent, a self-leveling material, a rust preventive agent, a coloring agent, a fungicide, a blast furnace slag, fly ash, cinder ash, clinker ash, husk ash, silica fume, silica powder, and gypsum. These publicly known cement additives (additive materials) may be used alone or in combination of two or more species.

Further, in the cement admixture composition of the present invention, a publicly known dispersant for cement can be used in combination and for example, the following substances can be used.

Lignosulfonic acid salt; polyol derivatives; a naphthalenesulfonic acid-formalin condensate; a melaminesulfonic acid-formalin condensate; polystyrene sulfonate salt; aminosulfonic compounds such as aminoarylsulfonic acid-phenol-formaldehyde condensate described in Japanese Kokai Publication No. Hl-113419; a dispersant for cement containing a copolymer of a polyalkylene glycol mono(meth)acrylate compound and a (meth)acrylic acid compound and/or salt thereof as a component (a), a copolymer of a polyalkylene glycol mono(meth)allyl ether compound and maleic anhydride and/or hydrolysate thereof, and/or salt thereof as a component (b), and a copolymer of a polyalkylene glycol mono(meth)allyl ether compound and maleic acid ester of a polyalkylene glycol compound and/or salt thereof as a component (c) as described in Japanese Kokai Publication No. H7-267705; a concrete admixture consisting of a copolymer of polyalkylene glycol ester of (meth) acrylic acid and (meth) acrylic acid (salt) as a component A, a specific polyethylene glycol-polypropylene glycol compound as a component B, and a specific surfactant as a component C as described in Japanese Patent No.2508113 specification; a copolymer formed from polyethylene (propylene) glycol ester of (meth) acrylic acid or polyethylene (propylene) glycol mono (meth) allyl ether, (meth) allyl sulfonic acid (salt), and (meth)acrylic acid (salt) as described in Japanese Kokai Publication No. S62-216950. A copolymer formed from polyethylene (propylene) glycol ester of (meth)acrylic acid, (meth) allyl sulfonic acid (salt), and (meth) acrylic acid (salt) as described in Japanese Kokai Publication No. H1-226757; a copolymer formed from polyethylene (propylene) glycol ester of (meth)acrylic acid, (meth)allyl sulfonic acid (salt) or p-(meth)allyl oxybenzenesulfonic acid (salt), and (meth)acrylic acid (salt) as described in Japanese Kokoku Publication H5-36377; a copolymer of polyethylene glycol mono(meth)allyl ether and maleic acid (salt) as described in Japanese Kokai Publication No. H4-149056; a copolymer formed from polyethylene glycol ester of (meth)acrylic acid, (meth) allyl sulfonic acid (salt), (meth) acrylic acid (salt), alkanediol mono(meth)acrylate, polyalkylene glycol mono (meth) acrylate, and α, β-unsaturated monomer having an amide group in a molecule as described in Japanese Kokai Publication No. H5-170501; a copolymer formed from polyethylene glycol mono (meth) allyl ether, polyethylene glycol mono (meth) acrylate, alkyl (meth) acrylate, (meth) acrylic acid (salt) and (meth) allyl sulfonic acid (salt) or p-(meth) allyl oxybenzenesulfonic acid (salt) as described in Japanese Kokai Publication No. H6-191918; a copolymer of alkoxypoly(alkylene glycol) monoallyl ether and maleic anhydride, or hydrolysate thereof or salt thereof as described in JapaneseKokai PublicationNo. H5-43288; a copolymer formed from polyethylene glycol monoallyl ether, maleic acid and a monomer which can be copolymerized with these monomers, or salt thereof, or ester thereof as described in Japanese Kokoku Publication No.58-38380.

A copolymer formed from a polyalkylene glycol mono(meth)acrylate monomer, a (meth)acrylic acid monomer and a monomer which can be copolymerized with these monomers as described in Japanese Examined Patent Publication No. S59-18338; a copolymer formed from a (meth) acrylate having a sulfone group and a monomer which can be copolymerized with this as required, or salt thereof as described in Japanese Kokai Publication No. S62-119147; a product of an esterification reaction between a copolymer of alkoxypoly(alkylene glycol) monoallyl ether and maleic anhydride and polyoxyalkylene derivatives having an alkenyl group at the end as described in Japanese Kokai Publication No. H6-271347; a product of an esterification reaction between a copolymer of alkoxypoly(alkylene glycol) monoallyl ether and maleic anhydride and polyoxyalkylene derivatives having a hydroxyl group at the end as described in Japanese Kokai Publication No. H6-298555; polycarboxylic acid (salt) such as a copolymer formed from an alkenyl ether monomer formed by adding ethylene oxide to a specific unsaturated alcohol such as 3-methyl-3butene-1-ol, an unsaturated carboxylic acid monomer, and a monomer which can be copolymerized with these monomers, or salt thereof as described in Japanese Kokai Publication No. S62-68806. A polycarboxylic acid copolymer obtained by copolymerizing monomer components containing a polyalkyleneimine unsaturated monomer and an unsaturated carboxylic acid monomer as described in International Publication WO 02053611; a polycarboxylic acid copolymer obtained by copolymerizing an unsaturated monomer having polyoxyalkylene, a (meth) acrylic acid monomer, respectively as essential components, and a monomer such as (meth)acrylate or acrylamide and a monomer having a multi-branched polyalkyleneoxide chain as described in Japanese Patent Application No. 2003-341953; a polyoxyalkylene compound formed by polymerizing by addition of alkyleneoxide in excess of the equivalent weight of an active hydrogen of an active hydrogen-containing amino group contained in polyalkylene polyamine to the active hydrogen-containing amino group as described in Japanese Kokai Publication No. 2000-109357. These dispersants for cement may be used alone or in combination of two or more species.

Among the above-mentioned dispersants for cement, it is particularly preferred to use the polycarboxylic acid copolymer obtained by copolymerizing monomer components containing a polyalkyleneimine unsaturated monomer and an unsaturated carboxylic acid monomer as described in International Publication WO 02053611 and/or the polycarboxylic acid copolymer obtained by copolymerizing an unsaturated monomer having polyoxyalkylene, a (meth) acrylic acid monomer, respectively as essential components, and a monomer such as (meth)acrylate or acrylamide and a monomer having a multi-branched polyalkyleneoxide chain as described in Japanese Patent Application No.2003-341953 and/or a polyoxyalkylene compound formed by polymerizing by addition of alkyleneoxide in excess of the equivalent weight of an active hydrogen of an active hydrogen-containing amino group contained in polyalkylene polyamine to the active hydrogen-containing amino group as described in Japanese Kokai Publication No. 2000-109357 together with the cement admixture of the present invention because the workability of cement is significantly improved and the secular changes in the fluidity of cement becomes less.

Examples of other publicly known cement additives (additive materials) include a cement wetting agent, a thickner, a segregation reducing agent, a flocculant, a dry shrinkage reducing agent, a strength enhancement agent, a self-leveling material, a rust preventive agent, a coloring agent and a fungicide. These publicly known cement additives (additive materials) may be used alone or in combination of two or more species.

The composition as a cement composition of the present invention comprises the foregoing cement admixture and cement. A particularly preferred embodiment of components other than the foregoing cement admixture, cement and water includes the following cases (1) to (7).
(1) A combination of two components, <1> the composition as a cement admixture of the present invention and <2> an oxyalkylene antifoamer, which are respectively essential. As an oxyalkylene antifoamer, polyoxyalkylenes, polyoxyalkylene alkyl ethers, polyoxyalkylene acetylene ethers and polyoxyalkylene alkyl amines can be used but polyoxyalkylene alkyl amines are particularly preferable. In addition, a proportion of the oxyalkylene antifoamer in the above <2> to be mixed is preferably in a range of 0.01 to 20% by weight relative to the cement admixture in the above <1>.
(2) A combination of three components, <1> the composition as a cement admixture of the present invention, <2> an oxyalkylene antifoamer, and <3> an air entraining (AE) agent, which are respectively essential. As an oxyalkylene antifoamer, polyoxyalkylenes, polyoxyalkylene alkyl ethers, polyoxyalkylene acetylene ethers and polyoxyalkylene alkyl amines can be used but polyoxyalkylene alkyl amines are particularly preferable. On the other hand, as an AE agent, resin acid soap, alkyl sulfates, and alkyl phosphates are particularly preferable. In addition, a proportion of the antifoamer in the above <2> to be mixed is preferably in a range of 0.01 to 20% by weight relative to the cement admixture in the above <1>. On the other hand, a proportion of the AE agent in the above <3> to be mixed is preferably in a range of 0.001 to 2% by weight relative to cement.
(3) A combination of three components, <1> the composition as a cement admixture of the present invention, <2> a copolymer formed from a polyalkylene glycol mono(meth)acrylate monomer having a polyoxyalkylene chain formed by adding alkyleneoxide having 2 to 18 carbon atoms in quantities of 2 to 300 moles in terms of an average number of moles added, a (meth) acrylic acid monomer and a monomer which can be copolymerized with these monomers (described in Japanese Examined Patent Publication No. S59-18338, Japanese Kokai Publication No. H7-223852, and JapaneseKokaiPublicationNo. H9-241056), and <3> an oxyalkylene antifoamer, which are respectively essential. In addition, a mixing ratio of the cement admixture in the above <1> to the copolymer in the above <2> is preferably in a range of 5/95 to 95/5 by weight and more preferably in a range of 10/90 to 90/10 by weight. A proportion of the oxyalkylene antifoamer in the above <3> to be mixed is preferably in a range of 0.01 to 20% by weight relative to the total weight of the cement admixture in the above <1> and the copolymer in the above <2>.
(4) A combination of two components, <1> the composition as a cement admixture of the present invention and <2> a retarder, which are respectively essential. As the retarder, oxycarboxylic acids such as gluconic acid (salt) and citric acid (salt), saccharides such as glucose, sugar alcohols such as sorbitol, and phosphonic acids such as aminotri (methylenephosphonic acid) can be used. In addition, as for a mixing ratio of the cement admixture in the above <1> to the retarder in the above <2>, a weight ratio of a copolymer (A) and/or a copolymer (B) to the retarder in the above <2> is preferably in a range of 50/50 to 99.9/0.1 by weight and more preferably in a range of 70/30 to 99/1 by weight.
(5) A combination of two components, <1> the composition as a cement admixture of the present invention and <2> an accelerator, which are respectively essential. As the accelerator, soluble calcium salts such as calcium chloride, calcium nitrite and calcium nitride, chlorides such as iron chloride and magnesium chloride, thiosulfuric acid salts, formic acid and formic acid salts such as calcium formate can be used. In addition, a mixing ratio of the cement admixture in the above <1> to the accelerator in the above <2> is preferably in a range of 10/90 to 99.9/0.1 by weight and more preferably in a range of 20/80 to 99/1 by weight.
(6) A combination of two components, <1> the composition as a cement admixture of the present invention and <2> a material segregation reducing agent, which are respectively essential. As the material segregation reducing agent, various thickners such as nonionic cellulose ether, and compounds having a hydrophobic substituent consisting of a hydrocarbon chain having 4 to 30 carbon atoms and a polyoxyalkylene chain formed by adding alkyleneoxide having 2 to 18 carbon atoms in quantities of 2 to 300 moles in terms of an average number of moles added as a partial structure can be used. In addition, a mixing ratio of the cement admixture in the above <1> to the material segregation reducing agent in the above <2> is preferably in a range of 10/90 to 99.99/0.01 by weight and more preferably in a range of 50/50 to 99.9/0.1 by weight. A cement composition of this combination is preferable for a high-fluidity concrete, a self-compacting concrete, and a self-reveling material.
(7) A combination of two components, <1> the composition as a cement admixture of the present invention and <2> a sulfonic acid dispersant having a sulfonic acid group in a molecule, which are respectively essential. As the sulfonic acid dispersant, lignosulfonic acid salt, a naphthalenesulfonic acid-formalin condensate, a melaminesulfonic acid-formalin condensate, polystyrene sulfonate salt, and an aminosulfonic dispersant such as aminoarylsulfonic acid-phenol-formaldehyde condensate can be used. In addition, a mixing ratio of the cement admixture in the above <1> to the sulfonic acid dispersant having a sulfonic acid group in a molecule in the above <2> is preferably in a range of 5/95 to 95/5 by weight and more preferably in a range of 10/90 to 90/10 by weight.

The composition as a cement composition of the present invention comprises the above-mentioned cement admixture and cement. The cement admixture composition of the present invention, that is, the composition as a cement admixture of the present invention can be added to cement compositions such as cement paste, mortar, concrete and the like to be used as with publicly known cement admixture compositions. It can also be used for ultra-high-strength concrete. As the above-mentioned cement composition, normally used materials including cement, water, a fine aggregate and a coarse aggregate are preferable. And, powder materials such as fly ash, a blast furnace slag, silica fume, lime stone and the like may be added. In addition, the ultra-high-strength concrete refers to a substance which is generally so called in the cement composition fields, that is, it refers to such a concrete that even when a ratio of water to cement is lower than that in conventional concrete, a cured concrete achieves the strength equal to or higher than that of the conventional concrete, and the ultra-high-strength concrete becomes concrete having the workability not disrupting the ordinary use, for example, even when the ratio of water to cement is 25% by weight or less, further 20% by weight or less, particularly 18% by weight or less, and particularly 14% by weight or less and about 12% by weight, and the cured concrete exhibits compressive strength of 60 N/mm² or more, further 80 N/mm² or more, furthermore 100 N/mm² or more, particularly 120 N/mm² or more, particularly 160 N/mm² or more, and particularly 200 N/mm² or more.

As the above-mentioned cement, mixed Portland cements such as regular Portland cement, high early strength Portland cement, super high early strength Portland cement, moderate heat Portland cement and white Portland cement; and mixed Portland cement of alumina cement, fly ash cement, blast furnace slag cement and silica cement are preferable. As for a mixing ratio and a unit content of water of the above-mentioned cement per 1 m³ of concrete, the unit content of water of 100 to 185 kg/m³ and the mixing ratio of water to cement of 10 to 70% are preferably employed in order to manufacture, for example, high-durability and high-strength concrete. The unit content of water of 120 to 175 kg/m³ and the mixing ratio of water to cement of 20 to 65% are more preferably employed.

As for the proportion of the composition as a cement admixture of the present invention in a cement composition, it is preferred to adapt the cement admixture in such a way that the content of the polycarboxylic acid polymer, the essential component, of the present invention is 0.01% by weight or higher and 10% by weight or lower relative to 100% by weight of the total cement weight. When the content of the polycarboxylic acidpolymer is lower than 0. 01% by weight, performance may become insufficient, and when it is higher than 10% by weight, it is economically disadvantageous. More preferably, it is 0.05% by weight or higher and 8% by weight or lower and furthermore preferably, it is 0.1% by weight or higher and 5% by weight or lower. In addition, the above-mentioned percentages by weight are values on the solid matter equivalent basis.

Since the polycarboxylic acid polymer for a composition as a cement admixture of the present invention has the above-mentioned constitution, entanglement between the polycarboxylic acid polymers for a cement admixture in a cement composition becomes less and therefore it can provide a polycarboxylic acid polymer for a cement admixture which can provide a cement composition superior in workability without increasing an amount of the polycarboxylic acid polymer for a cement admixture to be added to cement and in addition can impart adequate workability to a cement composition having a relatively small slump flow value, and a cement admixture and a cement composition which use the polycarboxylic acid polymer for a cement admixture. And, since the method of producing the polycarboxylic acid polymer for a composition as a cement admixture of the present invention comprises the above-mentioned steps, it can provide a production method of a polycarboxylic acid polymer for a cement admixture, by which the polycarboxylic acidpolymer for a composition as a cement admixture of the present invention can be efficiently produced.

Since the polycarboxylic acid polymer for a composition as a cement admixture of the present invention exerts an excellent water reducing property and can make the workability of a cement composition better, a cured formulation of cement having excellent strength and durability can be efficiently formed and produced with stability by employing the cement admixture composition of the present invention, and therefore the polycarboxylic acid polymer for a composition as a cement admixture of the present invention plays a large role in constructing civil engineering structures and building structures having excellent strength and durability.

### BEST MODE FOR CARRYING OUT THE INVENTION

Hereinafter, the present invention will be described in more detail by way of examples, but the present invention is not limited to these examples. In addition, "%" refers to "% by weight" unless otherwise specified.

[Method of measuring weight-average molecular weight of polymer (1)]
GPC column: TSKguardcolumn SWXL+TSKgel
G4000SWXL+G3000SWXL+G2000SWXL which is a product of TOSOH Corporation
Eluent: 115.6 g of sodium acetate trihydrate is dissolved in a mixed solvent of 10999 g of water and 6001 g of acetonitrile and further the resulting solution is adjusted to pH 6.0 with acetic acid to form an eluent.
Injection rate: 100 µl of a 0.5% eluent solution of polymer Eluent flow rate: 0.8 ml/min.
Column temperature: 40°C
Reference material: polyethylene glycol, a peak top molecular weight (Mp) 272500, 219300, 85000, 46000, 24000, 12600, 4250, 7100, 1470
Order of calibration curve: cubic equation
Detector: differential refractive index detector model 410 manufactured by Nihon Waters K.K.
Analysis software: MILLENNIUM Ver.3.21 manufactured by Nihon Waters K.K.

The weight average molecular weight measured by the method of measuring weight-average molecular weight of polymer (1) is also referred to as Mw1.

[Method of measuring weight-average molecular weight of polymer (2)]
Used column: TSKguardcolumn which is a product of TOSOH
Corporation, each one α+TSKgel, α-5000+TSKgel, α-4000+TSKgel, and α-3000 are connected.
Used eluent: a solution prepared by mixing acetonitrile 2000 g with a solution prepared by dissolving sodium dihydrogenphosphate ·2H₂O 62.4g and disodium
hydrogenphosphate·12H₂O 143.3g in ion exchange water 7794.3 g. Detector: triple detector Model 302, product of Viscotek Corp. Light scattering detector:
Right angle light scattering: scattering angle of 90°,
Low angle light scattering: scattering angle of 7°,
Cell capacity: 18 µL,
Wavelength: 670 nm
Standard sample: Polyethylene glycol SE-8 (Mw107000) which is a product of TOSOH Corp. is used; and the dn/dC is defined as 0.135 ml/g; and the refractive index of the used eluent is defined as 1.333. Thereby, the device constant is determined.
Injection rate:
Standard sample: 100 µL of the solution into which the polymer is dissolved in the above-mentioned eluent such that the polymer concentration is 0.2 vol% is injected.
Sample: 100 µL of the solution into which the polymer is dissolved in the above-mentioned eluent such that the polymer concentration is 1.0 vol% is injected.
Eluent flow rate: 0.8 ml/min.
Column temperature: 40°C

The weight average molecular weight measured by the method of measuring weight-average molecular weight of polymer (2) is also referred to as Mw2.

### (Production Example 1)

### [Production of polyfunctional mercaptan (A)]

Pentaerythritol 200 parts by weight, thioglycolic acid 412 parts by weight, and p-toluenesulfonic acid 1.0 part were charged into a reactor equipped with a thermometer, a stirrer, a nitrogen-introducing tube and a distilling tube and the content of the reactor was heated to 100 to 130°C and allowed to react while distilling off water produced by a dehydration reaction. The reactant was cooled and then neutralized with sodium hydroxide and washed with water to obtain polyfunctional mercaptan (A) 506 parts by weight (yield 95%).

### (Production Example 2)

### [Production of polycarboxylic acidpolymer for a cement admixture (1)]

Ion exchange water 450 parts by weight was charged into a reactor equipped with a thermometer, a stirrer, a dropping apparatus, a nitrogen-introducing tube and a cooling tube and heated to 80°C. Subsequently, a solution prepared by mixing:
an aqueous solution 675.00 parts by weight containing 66.7% of methoxypolyethylene glycol monomethacrylate having an average number of moles added of ethylene oxide of 25 and 13.3% of methacrylic acid; ion exchange water 15.82 g; and the polyfunctional mercaptan (A) 9.18 parts by weight was added dropwise over 4 hours and simultaneously a solution prepared by mixing ion exchange water 43. 63 parts by weight and ammonium persulfate 6. 37 parts by weight was added dropwise over 5 hours. Then, the resulting mixture was aged for one hour while maintaining it at 80°C and cooled and it was adjusted to pH 7 with a 30% aqueous solution of sodium hydroxide to obtain an aqueous solution (the concentration of solid matter was 45%) of a polycarboxylic acid polymer for a cement admixture (1) having a Mw1 of 20800 and a Mw2 of 51300, that is, a composition as a cement admixture (1) of the present invention.

### (Production Example 3)

### [Production of polycarboxylic acidpolymer for a cement admixture (2)]

Ion exchange water 450 parts by weight was charged into a reactor equipped with a thermometer, a stirrer, a dropping apparatus, a nitrogen-introducing tube and a cooling tube and heated to 80°C. Subsequently, a solution prepared by mixing:
an aqueous solution 675.00 parts by weight containing 66.7% of methoxypolyethylene glycol monomethacrylate having an average number of moles added of ethylene oxide of 25 and 13.3% of methacrylic acid; ion exchange water 14.20 g; and the polyfunctional mercaptan (A) 10.80 parts by weight was added dropwise over 4 hours and simultaneously a solution prepared by mixing ion exchange water 43. 63 parts by weight and ammonium persulfate 6. 37 parts by weight was added dropwise over 5 hours. Then, the resulting mixture was aged for one hour while maintaining it at 80°C and cooled and it was adjusted to pH 7 with a 30% aqueous solution of sodium hydroxide to obtain an aqueous solution (the concentration of solid matter was 45%) of a polycarboxylic acid polymer for a cement admixture (2) having a Mw1 of 16600 and a Mw2 of 33800, that is, a composition as a cement admixture (2) of the present invention.

### (Production Example 4)

### [Production of polycarboxylic acid polymer for a cement admixture (3)]

Ion exchange water 450 parts by weight was charged into a reactor equipped with a thermometer, a stirrer, a dropping apparatus, a nitrogen-introducing tube and a cooling tube and heated to 80°C. Subsequently, a solution prepared by mixing:
an aqueous solution 675.00 parts by weight containing 66.7% of methoxypolyethylene glycol monomethacrylate having an average number of moles added of ethylene oxide of 25 and 13.3% of methacrylic acid; ion exchange water 14.20 g; and the polyfunctional mercaptan (A) 5.40 parts by weight was added dropwise over 4 hours and simultaneously a solution prepared by mixing ion exchange water 43. 63 parts by weight and ammonium persulfate 6.37 parts by weight was added dropwise over 5 hours. Then, the resulting mixture was aged for one hour while maintaining it at 80°C and cooled and it was adjusted to pH 7 with a 30% aqueous solution of sodium hydroxide to obtain an aqueous solution (the concentration of solid matter was 45%) of a polycarboxylic acidpolymer for a cement admixture (3) having a Mw1 of 41800 and a Mw2 of 103100, that is, a composition as a cement admixture (3) of the present invention.

### (Production Example 5)

### [Production of polycarboxylic acidpolymer for a cement admixture (4)]

Ion exchange water 450 parts by weight was charged into a reactor equipped with a thermometer, a stirrer, a dropping apparatus, a nitrogen-introducing tube and a cooling tube and heated to 80°C. Subsequently, a solution prepared by mixing:
an aqueous solution 675.00 parts by weight containing 66.7% of methoxypolyethylene glycol monomethacrylate having an average number of moles added of ethylene oxide of 25 and 13.3% of methacrylic acid; ion exchange water 14.20 g; and the polyfunctional mercaptan (A) 7.56 parts by weight was added dropwise over 4 hours and simultaneously a solution prepared by mixing ion exchange water 43.63 parts by weight and ammonium persulfate 6.37 parts by weight was added dropwise over 5 hours. Then, the resulting mixture was aged for one hour while maintaining it at 80°C and cooled and it was adjusted to pH 7 with a 30% aqueous solution of sodium hydroxide to obtain an aqueous solution (the concentration of solid matter was 45%) of a polycarboxylic acidpolymer for a cement admixture (4) having a Mw1 of 26500 and a Mw2 of 65300, that is, a composition as a cement admixture (4) of the present invention.

### (Production Example 6)

### [Production of polycarboxylic acid polymer for a cement admixture (5)]

Ion exchange water 450 parts by weight was charged into a reactor equipped with a thermometer, a stirrer, a dropping apparatus, a nitrogen-introducing tube and a cooling tube and heated to 80°C. Subsequently, a solution prepared by mixing:
an aqueous solution 675.00 parts by weight containing 66.7% of methoxypolyethylene glycol monomethacrylate having an average number of moles added of ethylene oxide of 25 and 13.3% of methacrylic acid; ion exchange water 14.20 g; and the polyfunctional mercaptan (A) 2.70 parts by weight was added dropwise over 4 hours and simultaneously a solution prepared by mixing ion exchange water 43. 63 parts by weight and ammonium persulfate 6.37 parts by weight was added dropwise over 5 hours. Then, the resulting mixture was aged for one hour while maintaining it at 80°C and cooled and it was adjusted to pH 7 with a 30% aqueous solution of sodium hydroxide to obtain an aqueous solution (the concentration of solid matter was 45%) af a polycarboxylic acid polymer for a cement admixture (5) having a Mw1 of 77500 and a Mw2 of 193000, that is, composition as a a cement admixture (5) of the present invention.

### (Comparative Production Example 1)

### [Productionof polycarboxylic acidpolymer for a cement admixture (comparison 1)]

Ion exchange water 450 parts by weight was charged into a reactor equipped with a thermometer, a stirrer, a dropping apparatus, a nitrogen-introducing tube and a cooling tube and heated to 80°C. Subsequently, a solution prepared by mixing:
an aqueous solution 675.00 parts by weight containing 66.7% of methoxypolyethylene glycol monomethacrylate having an average number of moles added of ethylene oxide of 25 and 13.3% of methacrylic acid; ion exchange water 20.10 g; and 3-mercaptopropionate 6.40 parts by weight was added dropwise over 4 hours and simultaneously a solution prepared by mixing ion exchange water 43.63 parts by weight and ammonium persulfate 6.21 parts by weight was added dropwise over 5 hours. Then, the resulting mixture was aged for one hour while maintaining it at 80°C and cooled and it was adjusted to pH 7 with a 30% aqueous solution of sodium hydroxide to obtain an aqueous solution (the concentration of solid matter was 45%) of a polycarboxylic acid polymer for a cement admixture (comparison 1) having a Mw1 of 23500 and a Mw2 of 66700, that is, a composition as a cement admixture (comparison 1).

### (Comparative Production Example 2)

### [Productionof polycarboxylic acidpolymer for a cement admixture (comparison 2)]

Ion exchange water 450 parts by weight was charged into a reactor equipped with a thermometer, a stirrer, a dropping apparatus, a nitrogen-introducing tube and a cooling tube and heated to 80°C. Subsequently, a solution prepared by mixing:
an aqueous solution 675.00 parts by weight containing 66.7% of methoxypolyethylene glycol monomethacrylate having an average number of moles added of ethylene oxide of 25 and 13.3% of methacrylic acid; ion exchange water 20.10 g; and 3-mercaptopropionic acid 8.1 parts by weight was added dropwise over 4 hours and simultaneously a solution prepared by mixing ion exchange water 43.63 parts by weight and ammonium persulfate 6.21 parts by weight was added dropwise over 5 hours. Then, the resulting mixture was aged for one hour while maintaining it at 80°C and cooled and it was adjusted to pH 7 with a 30% aqueous solution of sodium hydroxide to obtain an aqueous solution (the concentration of solid matter was 45%) of a polycarboxylic acid polymer for a cement admixture (comparison 2) having a Mw1 of 18600 and a Mw2 of 47400, that is, composition as a cement admixture (comparison 2).

### (Comparative Production Example 3)

### [Production of polycarboxylic acidpolymer for a cement admixture (comparison 3)]

Ion exchange water 450 parts by weight was charged into a reactor equipped with a thermometer, a stirrer, a dropping apparatus, a nitrogen-introducing tube and a cooling tube and heated to 80°C. Subsequently, a solution prepared by mixing:
an aqueous solution 675.00 parts by weight containing 66.7% of methoxypolyethylene glycol monomethacrylate having an average number of moles added of ethylene oxide of 25 and 13.3% of methacrylic acid; ion exchange water 20.10 g; and 3-mercaptopropionic acid 5.0 parts by weight was added dropwise over 4 hours and simultaneously a solution prepared by mixing ion exchange water 43.63 parts by weight and ammonium persulfate 6.21 parts by weight was added dropwise over 5 hours. Then, the resulting mixture was aged for one hour while maintaining it at 80°C and cooled and it was adjusted to pH 7 with a 30% aqueous solution of sodium hydroxide to obtain an aqueous solution (the concentration of solid matter was 45%) of a polycarboxylic acid polymer for a cement admixture (comparison 3) having a Mw1 of 30300 and a Mw2 of 80900, that is, a composition as a cement admixture (comparison 3).

### (Comparative Production Example 4)

### [Product ion of polycarboxylic acidpolymer for a cement admixture (comparison 4)]

Ion exchange water 46.39 parts by weight was charged into a reactor equipped with a thermometer, a stirrer, a dropping apparatus, a nitrogen-introducing tube and a cooling tube. The inside of the reactor was substituted with nitrogen under stirring and heated to 70°C in nitrogen atmosphere.
Subsequently, a solution composed of 49.37 parts by weight of methoxypolyethylene glycol monomethacrylate having an average number of moles added of ethylene oxide of 10; methacrylic acid 13.11 parts by weight; 3-mercaptopropionic acid 0.83 parts by weight; and ion exchange water 15.62 parts by weight was added dropwise over 4 hours and simultaneously a 5.2% aqueous solution of ammonium persulfate 13.88 parts by weight was added dropwise over 5 hours. Then, the resulting mixture was aged for one hour while maintaining it at 70°C and the reaction was completed. Then, the reaction solution was neutralized to pH 7 with an aqueous solution of sodium hydroxide at a temperature (30°C) not higher than the polymerization reaction temperature, to obtain an aqueous solution (the concentration of solid matter was 40%) of a polycarboxylic acid polymer for a cement admixture (comparison 4) having a Mw1 of about 18500 and a Mw2 of 58700, that is, a composition as a cement admixture (comparison 4).

### (Comparative Production Example 5)

### [Production of H- (OC₂H₄)₁₃-(OC₃H₆)₂-(OC₂H₄)₁₀-OCH₃]

Polyethylene glycol monomethyl ether 1100 parts by weight (n=10) and potassium hydroxide 0.5 parts by weight were charged into a reactor equipped with a thermometer, a stirrer, a dropping apparatus, a raw material-introducing tube and a nitrogen-introducing tube. The inside of the reactor was substituted with nitrogen and heated to 120°C. While maintaining this temperature, propylene oxide 235 parts by weight was charged over 3 hours. After the charge, the mixture was further aged for 2 hours at 120°C, and the inside of the reactor was substituted with nitrogen again. Then, while maintaining the temperature to 120°C, ethylene oxide 1165 parts by weight was charged over 3 hours. After the charge, theresultingmixture was further aged for one hour to obtain alkylene glycol monomethyl ether with a hydroxyl value of 48 mg·KOH/g.

### [Production of monomer (a-1)]

The above-obtained alkylene glycol monomethyl ether 2203 parts by weight, methacrylic acid 450 parts by weight, paratoluenesulfonic acid monohydrate 59 parts by weight, phenothiazine 0.5 parts by weight, and cyclohexane 265 parts by weight as an azeotropic solvent were charged into a reactor equipped with a thermometer, a stirrer, a nitrogen-introducing tube, and a condensation water separation tube. The mixture was heated for 20 hours and thereby the esterificationwas allowed to proceed and condensation water was separated while maintaining the temperature to 115°C. Ion exchange water 556 parts by weight and a 30% aqueous solution of sodium hydroxide 4 6 parts by weight were added at an esterification rate 99% (conversion rate of alkylene glycol monomethyl ether), and then the temperature was raised again. Then, the cyclohexane was removed by azeotropy, and ion exchange water was added to obtain an aqueous solution of a mixture containing 70% of an esterified product (a-1) having the structure of the monomer (a-1) shown in Table 1 and 10% of residual methacrylic acid.

### [Production of polycarboxylic acidpolymer for a cement admixture (comparison 5)]

Ion exchange water 50 parts by weight was charged into a reactor equipped with a thermometer, a stirrer, a dropping apparatus, a nitrogen-introducing tube and a cooling tube and heated to 80°C. Subsequently, a solution prepared by mixing:
the aqueous solution of the mixture 203 parts by weight containing 70% of the esterified product (a-1) having the structure of the monomer (a-1) and 10% of the residual methacrylic acid;
methacrylic acid 17.6 parts by weight, ion exchange water 76.6 parts by weight; and 3-mercaptopropionic acid 2.8 parts by weight was added dropwise over 4 hours and simultaneously a solution prepared by mixing ion exchange water 47.9 parts by weight and ammonium persulfate 2.1 parts by weight was added dropwise over 5 hour. Then, the resulting mixture was aged for one hour while maintaining it at 80°C and cooled and it was adjusted to pH 7 with a 30% aqueous solution of sodium hydroxide. Then, ion exchange water was further added to obtain an aqueous solution (the concentration of solid matter was 20%) of a polycarboxylic acid polymer for a cement admixture (comparison 5) having a Mw1 of 14000 and a Mw2 of 46300.

### [Production of polycarboxylic acid polymer for a cement admixture (comparison 6)]

Water 597.4 parts by weight was charged into a reactor equipped with a thermometer, a stirrer, a dropping apparatus, a nitrogen-introducing tube and a cooling tube. Under stirring, the inside of the reaction was substituted with nitrogen and heated to 75°C in a nitrogen atmosphere. A monomer aqueous solution prepared by mixing: 633.1 parts by weight of methoxypolyethylene glycol monomethacrylate having an average number of moles added of ethylene oxide of 6; methacrylic acid 167.2 parts by weight; 3-mercaptopropionic acid 9.2 parts by weight; and water 165.5 parts by weight was added dropwise over 5 hours and simultaneously a 11.1% aqueous solution of ammonium persulfate 84.0 parts by weight was added dropwise over 6 hours. After completion of dropwise addition of the 11.1% aqueous solution of ammonium persulfate, the temperature was maintained at 75°C for one more hour and the polymerization reaction was completed. Then, the resulting mixture was neutralized to pH 7.0 with a 30% aqueous solution of sodium hydroxide to obtain an aqueous solution of a polycarboxylic acid polymer for a cement admixture (comparison 6) having a Mw1 of 15000 and a Mw2 of 48100.

### [Production of polycarboxylic acidpolymer for a cement admixture (comparison 7)]

Polyethyleneimine ethylene oxide adduct (compound prepared by adding ethylene oxide to active hydrogen of polyethyleneimine having a Mw of 600, the average number of moles added of ethylene oxide being 3) 600 parts by weight, methoquinone 0.123 parts by weight, and acetic acid 18.45 parts by weight were charged into a reactor equipped with a thermometer, a stirrer, a dropping apparatus, a air-introducing tube and a cooling tube. The reactor was maintained to 90 to 95°C for 30 minutes. Then, while maintaining the temperature to 90 to 95°C, glycidyl methacrylate 47.35 parts by weight was added dropwise into the reactor over 60 minutes. Then, the temperature was maintained to 90 to 95°C for one hour and then lowered to 65°C. Then, water 990.4 parts by weight and methacrylic acid 78.6 parts by weight were charged and thereby the resulting mixture was adjusted to pH 7.0 to synthesize a polyethyleneimine ethylene oxide adduct monomer 1.

Water 1100 parts by weight was charged into a reactor equipped with a thermometer, a stirrer, a dropping apparatus, a nitrogen-introducing tube and a cooling tube. Under stirring, the inside of the reaction was substituted with nitrogen and heated to 70°C in a nitrogen atmosphere. A monomer aqueous solution prepared by mixing: methoxypolyethylene glycol monomethacrylate (the average number of moles added of ethylene oxide is 4) 1286.3 parts by weight; methacrylic acid 192.2 parts by weight; water 192.9 parts by weight; and 3-mercaptopionate 65.6 parts by weight as a chain transfer agent, and 1013 parts by weight of the above-mentioned polyethyleneimine ethylene oxide adduct monomer 1 were each added dropwise into the reactor over 4 hours. And simultaneously a 14.8% aqueous solution of ammonium persulfate 352 parts by weight was added dropwise into the reactor over 5 hours. After completion of the dropwise addition of the 14.8% aqueous solution of ammonium persulfate, the temperature was maintained to 70°C for one more hour and the polymerization reaction was completed. The resulting mixture was neutralized to pH 7.0 with a 30% aqueous solution of sodium hydroxide to obtain an aqueous solution of a polycarboxylic acid polymer for a cement admixture (comparison 7) having a Mw1 of 9000 and a Mw2 of 28900

### [Production of cement admixture (comparison 5)]

A cement admixture (comparison 5) was prepared by mixing the above-obtained polycarboxylic acid polymer for a cement admixture (comparison 5) 150 parts by weight, the polycarboxylic acid polymer for a cement admixture (comparison 6) 94.89 parts by weight, the polycarboxylic acid polymer for a cement admixture (comparison 7) 22. 75 parts by weight, and 13.65 parts by weight of an admixture C having a structure shown in Table 1.

**Table 1**

| Monomer or Admixture | Structural formula or Explanation |
|---|---|
| Monomer (a-1) | CH₂=C(CH₃)COO-(C₂H₄O)₁₃-(C₃H₆O)₂-(C₂H₄O)₁₀-CH₃ |
| Admixture (C) | Polyalkyleneimine alkylene oxide adduct prepared by adding ethylene oxide 3 mole, and polypropylene oxide 6 mole, and further ethylene oxide 17 mole to 1 equivalent of active hydrogen derived from amino group (-NH) of polyethyleneimine (Mw=600) |

Table 2 shows values of Mw1, Mw2, and Mw2/Mw1 of the cement admixtures (1) to (4) and (comparison 1) to (comparison 4).

**Table 2**

| Cement admixture composition No. | Mw1 | Mw2 | Mw2/Mw1 |
|---|---|---|---|
| (1) | 20800 | 51300 | 2.47 |
| (2) | 16600 | 33800 | 2.04 |
| (3) | 41800 | 103100 | 2.47 |
| (4) | 26500 | 65300 | 2.46 |
| (5) | 77500 | 193000 | 2.49 |
| (Comparison 1) | 23500 | 66700 | 2.84 |
| (Comparison 2) | 18600 | 47400 | 2.55 |
| (Comparison 3) | 30300 | 80900 | 2.67 |
| (Comparison 4) | 18500 | 58700 | 3.17 |
| (Comparison 5) | 14000 | 46300 | 3.31 |
| (Comparison 6) | 15000 | 48100 | 3.21 |
| (Comparison 7) | 9000 | 28900 | 3.21 |

### (Examples 1, 2 and Comparative Example 1)

Using the composition as a cement admixtures (1), (2), (comparison 1) obtained in Production Examples 2, 3 and Comparative Production Example 1, mortar was prepared according to the mix formula shown in Table 3 and kneaded to obtain a composition as a cement composition (1) and (2) of the present invention, and (comparison 1). A mortar test was carried out using the obtained cement compositions (1), (2), (comparison 1) .

### [Method of mortar test]

Using the cement admixtures (1), (2), (comparison 1) shown in Examples 1, 2 and Comparative Example 1, mortar was prepared according to the mix formula shown in Table 3 and kneaded, and the slump flow value of the mortar and the viscosity of the mortar in mixing it with a shovel were evaluated. The results of the evaluations are shown in Table 4.
Formula of mortar

**Table 3**

| W/C (% by weight) | Unit amount to be mixed (part by weight) | | |
|---|---|---|---|
| | Fine aggregate | Water | Cement |
| 33.3 | 600 | 200 | 600 |

Cement: manufactured by TAIHEIYO CEMENT Corporation; regular Portland cement
Fine aggregate: standard sand of TOYOURA origin

Amounts of the cement admixture to be mixed relative to the cement weight were calculated in terms of a solid matter content of the admixture and shown in percentages in Table 3.

### Kneading conditions

According to the above-mentioned formula, cement and fine aggregate were charged into a HOBART mixer and the resulting mixture was kneaded for 30 seconds at a rotation 1, and then water mixed with a cement admixture was added and the resulting mixture was kneaded for 30 seconds at a rotation 1 and further kneaded for 60 seconds at a rotation 2. Then, the mixture adhering to a wall of the mixer was scraped off and the mixture was further kneaded for 60 seconds at a rotation 2 to produce mortar.

### Evaluation method and evaluation criteria

A slump flow value of the obtained mortar was measured according to the Japanese Industrial Standard (JIS A 1101, 1128, 6204). The viscosity of the mortar represents a feeling at the time of kneading the mortar with a shovel, and the mortar having particularly low viscosity and particularly good workability was rated as "Excellent", the mortar having adequately low viscosity and good workability was ratedas "Good", and the mortar having too high viscosity and bad workability was rated as "Poor".

### Results of evaluations

**Table 4**

| | Cement admixture composition No. | Addition amount (solid matter % to cement weigtht) | Mortar flow (mm) | Mortar state |
|---|---|---|---|---|
| Example 1 | (1) | 0.12 | 201 | Good |
| Example 2 | (2) | 0.12 | 185 | Excellent |
| Comparative Example 1 | (Comparison 1) | 0.12 | 199 | Poor |

As is apparent from the results shown in Table 4, the fluidity of the cement composition (1) of the present invention shown in Example 1 is equal to that of the cement composition (comparison 1) in Comparative Example 1 since the cement composition (1) of the present invention exhibited the same mortar flow value at the same addition amount as in Comparative Example 1, and mortar viscosity of the cement composition (1) of the present invention is lower than that of the cement composition (comparison 1) of Comparative Example 1 and superior in a state and workability to Comparative Example 1. This shows that the water reducing property of the composition as a cement admixture (1) of the present invention used in Example 1 is equal to the water reducing property of the cement admixture (comparison 1) used in Comparative Example 1 and the cement admixture (1) has a higher effect of reducing the viscosity of a cement composition than the cement admixture (comparison 1).

Further remarkably, as is apparent from the results shown in Table 4, the cement composition (2) of the present invention used in Example 2 exhibited a slightly smaller mortar flow value at the same addition amount as the cement composition (comparison 1) in Comparative Example 1 but mortar viscosity of the cement composition (2) of the present invention is significantly lower than that of the cement admixture (comparison 1) and superior in a state and workability. This shows that the composition as a cement admixture (2) of the present invention used in Example 2 has a significantly higher effect of reducing the viscosity of a cement composition than the cement admixture (comparison 1).

### [Examples 3 to 7 and Comparative Examples 2 to 6]

Using the cement admixtures (1) to (5) and (comparison 1) to (comparison 5) obtained in Examples 2 to 6 and Comparative Examples 1 to 5, concretes were prepared according to the following mix formula and kneaded. Thereby, the cement compositions (3) to (7) of the present invention and (comparison 2) to (comparison 6) were obtained. Using the obtained concrete compositions (3) to (7) and (comparison 2) to (comparison 6), concrete test was performed.

### [Method of concrete test]

Using the cement admixtures (1) to (5) and (comparison 1) to (comparison 5) obtained in Production Examples 2 to 6 and Production Comparative Examples 1 to 5, concretes were prepared according to the following mix formula and kneaded. The concretes were evaluated for slump flow values immediately after the kneading and over time, and evaluated for workability at the time of mixing with a shovel. The results of the evaluations are shown in Table 5.

### Formula of concrete

The unit amount to be mixed was as follows.
Water: 172 kg/m³
Cement: (manufactured by TAIHEIYO CEMENT Corporation; regular Portland cement) 573.3 kg/m³
Coarse aggregate: (macadam of Ome origin) 861.5 kg/m³
Fine aggregate: (mixture of river sand of Oigawa origin and sand of Kimitsu, Chiba origin, Oigawa:Kimitsu = 80:20 at a ratio by weight) 739.4 kg/m³

Microair MA404 (product of Pozzolith Bussan Co, Ltd.) as an antifoaming agent 0.02% by weight relative to the cement weight, and Microair MA202 (product of Pozzolith Bussan Co, Ltd.) as an AE agent 0.003% by weight relative to the cement weight was added.

Amounts of the cement admixture to be mixed relative to the cement weight were calculated in terms of a solid matter content of the admixture and shown in percentages (% by weight) in Table 5.

### Production conditions of concrete

The cement and the fine aggregate were charged into a 50 L-biaxial forced mixer at the above-mentioned mix formula, and dry-mixed for 10 seconds. Then, water into which the cement admixture was mixed was added and the mixture was kneaded for 90 seconds. Then, the coarse aggregate was charged and the mixture was further kneaded for 90 seconds. Thereby, concrete was produced.

### Evaluation method and evaluation criteria

A slump flow value and air content of the obtained concrete were measured according to the Japanese Industrial Standard (JIS A 1101, 1128, 6204). The workability of the concrete represents a feeling at the time of kneading the concrete with a shovel, and is evaluated with a score of 1 to 5. That is, 5 is given for the concrete having the best workability, and 1 is given for the concrete having the worst workability.

**Table 5**

| | Cement admixture composition No. | Addition amount (solid matter % to cement weight) | Immediately after kneading | | 5 minutes after kneading | | 30 minutes after kneading | |
|---|---|---|---|---|---|---|---|---|
| | | | Flow value (mm) | Workability | Flow value (mm) | Workability | Flow value (mm) | Workability |
| Example 3 | (1) | 0.18 | 560 | 5 | 540 | 5 | 390 | 3 |
| Example 4 | (2) | 0.18 | 635 | 5 | 628 | 5 | 505 | 4 |
| Example 5 | (3) | 0.18 | 440 | 3 | 388 | 3 | 290 | 2 |
| Example 6 | (4) | 0.18 | 510 | 4 | 473 | 3 | 320 | 3 |
| Example 7 | (5) | 0.18 | 410 | 3 | 353 | 3 | 275 | 2 |
| Comparative Example 2 | (Comparison 1) | 0.16 | 595 | 3 | 505 | 2 | 283 | 1 |
| Comparative Example 3 | (Comparison 2) | 0.16 | 533 | 2 | 470 | 2 | 288 | 1 |
| Comparative Example 4 | (Comparison 3) | 0.16 | 423 | 1 | 365 | 1 | 280 | 1 |
| Comparative Example 5 | (Comparison 4) | 0.22 | 515 | 2 | 580 | 4 | 540 | 3 |
| Comparative Example 6 | (Comparison 5) | 0.40 | 510 | 2 | 645 | 4 | 653 | 2 |

The results of the concrete test shown in Table 5 shows the following circumstances.

The concretes inExamples 3 to 7 have different flowvalues, but each of the concretes has a low concrete viscosity immediately after kneading and has workability equivalent to or better than that of the concretes in Comparative Examples 2 to 6. Each of the concretes in Examples 3 to 7 have workability sufficiently although the addition amount in Examples 3 to 7 are less than that of Comparative Examples 5 and 6. It is notable that each of the concretes in Examples 3 and 4 has a significantly lower viscosity and much better workability than the concretes in Comparative Examples 2 to 6 and that each of the concretes in Examples 5 to 7 has workability equivalent to or better than that of the concrete in Comparative Example 2, although having a flow value smaller than that of the concrete in Comparative Example 2.

By using a polycarboxylic acid polymer for a composition as a cement admixture having a main chain which has a branched structure, the effect of the present invention that the concretes of the present invention has low concrete viscosity and sufficient workability even if the addition amount is small is sufficiently exerted.

In Examples 3 to 7, the addition amount of the solid matter content of the cement admixture is larger than that in Comparative Examples 2 to 4. However, the increase of the addition amount in Examples 3 to 7 is preferable because Comparative Examples 2 to 4 in which a small amount of the cement admixtures is added show a too large flow value by small increase of the unit amount of water to be mixed and are easily influenced by various concrete conditions such as the concrete mix formula, and therefore such concretes are hard to deal with.

The degree of influence of the unit amount of water to be mixed depends on the concrete formula such as shape of the aggregate. In the concrete formula in Examples 3 to 7 and Comparative Example 2, for example, the flow value immeadiately after kneading increased by 50 mm or more in the concrete formula mixing the cement admixtures (comparison 1) and (comparison 2) if the unit amount of water to be mixed increased from 172 kg/m³ to 177 kg/m³. Therefore, desired concrete flow values were not obtained. However, in the concrete formula mixing cement admixtures (1) to (4) of the present invention, the flow value increased by 40 mm or less if the unit amount of water to be mixed increased from 172 kg/m³ to 177 kg/m³. Therefore, concrete flow values close to the desired values were obtained.

However, the significant increase of the addition amount in Comparative Examples 5 and 6 is economically inefficient. And such cement admixtures have the following disadvantages:
insufficient cement dispersibility increases concrete viscosity, resulting in insufficient workability; and increase of the flow value over time causes difficulty in controlling fluidity.

From the above results, the compositions as cement admixtures (1) to (5) of the present invention shown in Examples 3 to 7 are remarkably excellent in workability immediately after kneading and over time, and have no damage to economic efficiency. And such cement admixtures are expected not to be easily influenced by variation of various concrete conditions.

The present application claims priority under 35 U.S.C. §119 to Japanese Patent Application No.2005-276113, filed September 22, 2005, entitled "POLYCARBOXYLIC ACID POLYMER FOR A CEMENT ADMIXTURE AND A CEMENT ADMIXTURE".
The contents of these applications are incorporated herein by reference in their entirety.

## Claims

1. A composition using as a cement admixture including a polycarboxylic acid polymer having a main chain comprising a constituent unit expressed by the following formula (1): 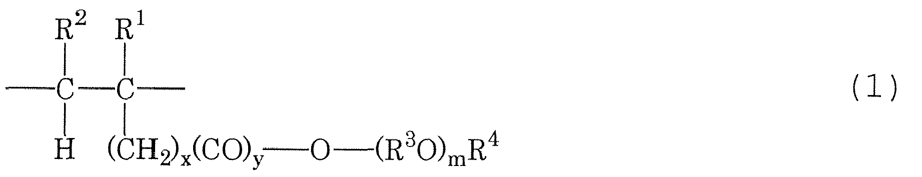 in the formula (1), R¹ and R² being the same or different and each representing a hydrogen atom or a methyl group, x representing a number of 0 to 2, y representing 0 or 1, R³O being the same or different and each representing an oxyalkylene group having 2 to 18 carbon atoms, R⁴ representing a hydrogen atom or a hydrocarbon group having 1 to 30 carbon atoms, and m being an average number of moles added of an oxyalkylene group and representing a number of 1 to 300,
wherein the main chain of the polymer has a branched structure.

2. The composition using as a cement admixture including a polycarboxylic acid polymer according to claim 1,
wherein the polycarboxylic acid polymer for a cement admixture is a polymer expressed by the following formula (2):
(R⁵OX)_{α}Y(Z-S-P)_{β} (2)
in the formula (2), X representing an alkylene group having 1 to 30 carbon atoms, OX representing an oxyalkylene group having 1 to 30 carbon atoms, R⁵ representing a hydrogen atom or an alkyl group having 1 to 30 carbon atoms, Y representing either a carbon atom or a hydrocarbon group having 1 to 30 carbon atoms, Z representing an alkylene group or ester having 1 to 30 carbon atoms, α representing a number of 0 to 25, β representing a number of 2 to 50, S representing a sulfur atom and P representing a polycarboxylic acid polymer for a cement admixture comprising a site expressed by the formula (1).

3. A composition using as a cement admixture including a polycarboxylic acid polymer obtained by polymerizing monomer components comprising:
a polyfunctional mercaptan expressed by the following formula (3):
(R⁵OX)_{α}Y(Z-SH)_{β} (3)
in the formula (3), X representing an alkylene group having 1 to 30 carbon atoms, R⁵ representing a hydrogen atom or an alkyl group having 1 to 30 carbon atoms, Y representing either a carbon atom or a hydrocarbon group having 1 to 30 carbon atoms, Z representing an alkylene group or ester having 1 to 30 carbon atoms, α representing a number of 0 to 25, β representing a number of 2 to 50, S representing a sulfur atom and H representing a hydrogen atom; and
a monomer expressed by the following formula (4): 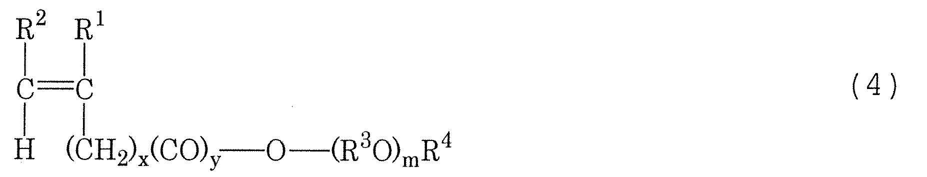 in the formula (4), R¹ and R² being the same or different and each representing a hydrogen atom or a methyl group, x representing a number of 0 to 2, y representing 0 or 1, R³O being the same or different and each representing an oxyalkylene group having 2 to 18 carbon atoms, R⁴ representing a hydrogen atom or a hydrocarbon group having 1 to 30 carbon atoms, and m being an average number of moles added of an oxyalkylene group and representing a number of 1 to 300.

4. A composition using as a cement admixture including a polycarboxylic acid polymer having a main chain comprising a constituent unit expressed by the following formula (1): 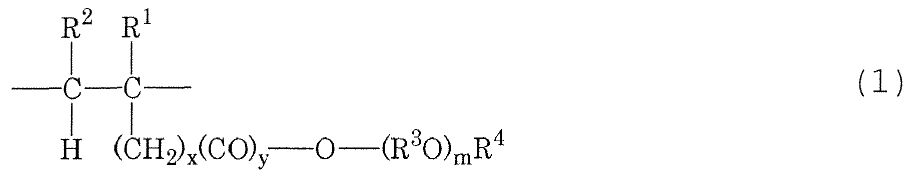 in the formula (1), R¹ and R² being the same or different and each representing a hydrogen atom or a methyl group, x representing a number of 0 to 2, y representing 0 or 1, R³O being the same or different and each representing an oxyalkylene group having 2 to 18 carbon atoms, R⁴ representing a hydrogen atom or a hydrocarbon group having 1 to 30 carbon atoms, and m being an average number of moles added of an oxyalkylene group and representing a number of 1 to 300,
wherein the polymer has a ratio (Mw2/Mw1) of a weight average molecular weight (Mw2) measured using a light scattering detector to a weight average molecular weight (Mw1) measured using a differential refractive index detector of 2.5 or less.

5. The composition using as a cement admixture including a polycarboxylic acid polymer according to claim 4,
wherein the weight average molecular weight (Mw2) measured using the light scattering detector is 35000 or less and the ratio (Mw2/Mw1) of the weight average molecular weight (Mw2) measured using the light scattering detector to the weight average molecular weight (Mw1) measured using the differential refractive index detector is 2.1 or less.

6. A composition using as a cement composition comprising the cement admixture of claim 1, 2, 3, 4 or 5 and cement.

7. A method for producing the polycarboxylic acid polymer for a cement admixture of claim 3, comprising a step of polymerizing the monomer components comprising:
the polyfunctional mercaptan expressed by the following formula (3):
(R⁵OX)_{α}Y(Z-SH)_{β} (3)
in the formula (3), X representing an alkylene group having 1 to 30 carbon atoms, R⁵ representing a hydrogen atom or an alkyl group having 1 to 30 carbon atoms, Y representing either a carbon atom or a hydrocarbon group having 1 to 30 carbon atoms, Z representing an alkylene group or ester having 1 to 30 carbon atoms, α representing a number of 0 to 25, β representing a number of 2 to 50, S representing a sulfur atom and H representing a hydrogen atom; and
the monomer expressed by the following formula (4): 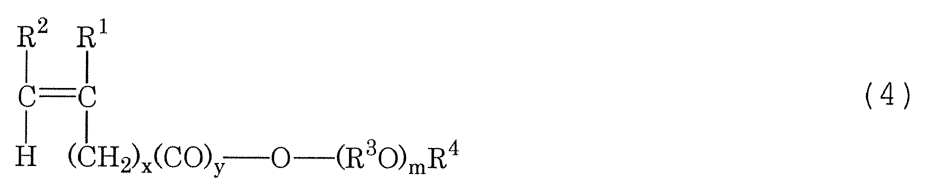 in the formula (4), R¹ and R² being the same or different and each representing a hydrogen atom or a methyl group, x representing a number of 0 to 2, y representing 0 or 1, R³O being the same or different and each representing an oxyalkylene group having 2 to 18 carbon atoms, R⁴ representing a hydrogen atom or a hydrocarbon group having 1 to 30 carbon atoms, and m being an average number of moles added of an oxyalkylene group and representing a number of 1 to 300.

8. The method of producing the polycarboxylic acid polymer for a cement admixture according to claim 7,
wherein R⁵ is a hydrogen atom and α is 1 in the formula (3).
